# EUROPEAN PATENT APPLICATION

(11) **EP 4 746 497 A1**
(43) Date of publication of application: **20.05.2026**
(21) Application number: 23944684.2
(22) Date of filing: 12.07.2023
(51) Int. Cl.: H04W 24/06

(54) **TIME DOMAIN MOBILITY PREDICTION METHOD AND APPARATUS, DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN); SHI, Zhihua, Dongguan, Guangdong 523860 (CN)
(74) Representative: Penza, Giancarlo
(86) International application number: PCT/CN2023/107045
(87) International publication number: WO 2025/010664

(57) **Abstract**

Embodiments of the present disclosure provide a temporal domain mobility prediction method and apparatus, a communication device, a chip, and a storage medium. The method includes: a terminal obtaining K measurement instance(s) corresponding to a first downlink reference signal set, the K measurement instance(s) being obtained based on measurement performed by the terminal on downlink reference signals in the first downlink reference signal set at K measurement time instance(s), the first downlink reference signal set including first downlink reference signal subsets of N cell(s), the K measurement instance(s) being used to obtain F prediction instance(s) corresponding to a second downlink reference signal set based on a first model, different prediction instances corresponding to different prediction time instances, and the second downlink reference signal set including second downlink reference signal subsets of P cell(s), K, N, F, and P being integers greater than or equal to 1.

## Description

### TECHNICAL FIELD

Embodiments of the present disclosure relate to the technical field of communications, and particularly relate to a temporal domain mobility prediction method and apparatus, device, chip, and storage medium.

### BACKGROUND

Traditional mobility schemes are measurement-based reactive schemes, that is, link quality will not be noticed until it drops to a certain extent, and then subsequent mobility management processess are triggered, such as cell handover. However, such schemes usually have a certain latency, which leads to a long latency of cell handover (or untimely cell handover), and then leads to the degradation of communication performance.

### SUMMARY

Embodiments of the present disclosure provide a temporal domain mobility prediction method and apparatus, device, chip, and storage medium.

**In** a first aspect, an embodiment of the present disclosure provides a mobility prediction method which includes the following operations.

A terminal obtains K measurement instance(s) corresponding to a first downlink reference signal set, and the K measurement instance(s) is (are) obtained based on measurement performed by the terminal on downlink reference signals in the first downlink reference signal set at K measurement time instance(s), and the first downlink reference signal set includes first downlink reference signal subsets of N cell(s). The K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s); and K, N, F, and P are integers greater than or equal to 1.

In a second aspect, an embodiment of the present disclosure provides a mobility prediction method which includes the following operations.

A network device receives K measurement instance(s) corresponding to a first downlink reference signal set from a terminal, and the K measurement instance(s) is (are) obtained based on measurement performed by the terminal on downlink reference signals in the first downlink reference signal set at K measurement time instances, and the first downlink reference signal set includes first downlink reference signal subsets of N cell(s). The K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s); and K, N, F, and P are integers greater than or equal to 1.

In a third aspect, an embodiment of the present disclosure provides a mobility prediction apparatus, which is applied to a terminal and includes an obtaining unit.

The obtaining unit is configured to obtain K measurement instance(s) corresponding to a first downlink reference signal set. The K measurement instance(s) is (are) obtained based on measurement performed by the terminal on downlink reference signals in the first downlink reference signal set at K measurement time instance(s), and the first downlink reference signal set includes first downlink reference signal subsets of N cell(s). The K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s); and K, N, F, and P are integers greater than or equal to 1.

In a fourth aspect, an embodiment of the present disclosure provides a mobility prediction apparatus, which is applied to a network device, and the apparatus includes a receiving unit.

The receiving unit is configured to receive K measurement instance(s) corresponding to a first downlink reference signal set from a terminal. The K measurement instance(s) is (are) obtained based on measurement performed by the terminal on downlink reference signals in the first downlink reference signal set at K measurement time instance(s), and the first downlink reference signal set includes first downlink reference signal subsets of N cell(s). The K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s); and K, N, F, and P are integers greater than or equal to 1.

In a fifth aspect, an embodiment of the present disclosure provides a communication device including a memory and a processor. The memory is configured to store computer-executable instructions, and the processor coupled to the memory is for implementing the method of any of the above aspects by executing the computer-executable instructions.

In a sixth aspect, an embodiment of the present disclosure provides a chip. The chip includes a processor for calling and running a computer program from a memory to enable a device on which the chip is mounted to perform the method of any of the above aspects.

In a seventh aspect, an embodiment of the present disclosure provides a computer-readable storage medium storing a computer program that, when executed by at least one processor, implements the method of any of the above aspects.

In the scheme of the technology of the embodiments of the present disclosure, the K measurement instance(s) are historical measurement results obtained by the terminal by measuring the downlink reference signals in the first downlink reference signal set at K measurement time instances, and the future F prediction instance(s) can be predicted according to the historical measurement results based on the first model. Such mobility scheme is a pro-active scheme and has a strong forward-looking view. F prediction instances can trigger mobility management processes in time, thereby avoiding degradation of communication performance caused by latencys in mobility management processes.

### BRIEF DESCRIPTION OF THE DRAWINGS

The accompanying drawings described herein are intended to provide a further understanding of the present disclosure, and constitute a part of the present disclosure. The embodiments of the present disclosure and the description thereof are intended to explain the present disclosure, and do not constitute an undue limitation of the present disclosure. In the drawings:
FIG. 1 is a schematic diagram of an application scenario according to an embodiment of the present disclosure;
FIG. 2 is a schematic diagram of an example of downlink beam management in an NR system;
FIG. 3 is a schematic diagram of an example of a neuron structure;
FIG. 4 is a schematic diagram of an example of a neural network;
FIG. 5 is a schematic diagram of an LSTM network;
FIG. 6 is a schematic diagram of an example of a neural network model applicable to an embodiment of the present disclosure;
FIG. 7 is another schematic diagram of a neural network model applicable to an embodiment of the present disclosure;
FIG. 8 is still another schematic diagram of a neural network model applicable to an embodiment of the present disclosure;
FIG. 9 is a schematic diagram of a temporal domain mobility measurement and prediction provided by an embodiment of the present disclosure;
FIG. 10 is a schematic diagram of a temporal relationship between a measurement instance and a prediction instance provided by an embodiment of the present disclosure;
FIG. 11 is another schematic diagram of a temporal relationship between a measurement instance and a prediction instance provided by an embodiment of the present disclosure;
FIG. 12 is a schematic flow diagram of a temporal domain mobility prediction method according to an embodiment of the present disclosure.
FIG. 13 is a schematic diagram of an input-output relationship of a temporal domain mobility prediction model according to an embodiment of the present disclosure.
FIG. 14 is a second schematic diagram of an input-output relationship of a temporal domain mobility prediction model according to an embodiment of the present disclosure.
FIG. 15 is a third schematic diagram of an input-output relationship of a temporal domain mobility prediction model according to an embodiment of the present disclosure;
FIG. 16 is a second schematic flowchart of a temporal domain mobility prediction method according to an embodiment of the present disclosure;
FIG. 17 is a third schematic flow diagram of a temporal domain mobility prediction method according to an embodiment of the present disclosure;
FIG. 18 is a schematic diagram of the structure and composition of a mobility prediction device according to the embodiment of the present disclosure;
FIG. 19 is a second schematic diagram of the structural composition of a mobility prediction apparatus according to the embodiment of the present disclosure;
FIG. 20 is a schematic structural diagram of a communication device according to an embodiment of the present disclosure;
FIG. 21 is a schematic structural diagram of a chip according to an embodiment of the present disclosure;
FIG. 22 is a schematic block diagram of a communication system according to an embodiment of the present disclosure.

### DETAILED DESCRIPTION

The technical solutions in the embodiments of the present disclosure will be described hereinafter with reference to the drawings in the embodiments of the present disclosure. The described embodiments are part but not all of the embodiments of the present disclosure. Based on the embodiments in the present disclosure, all other embodiments obtained by those skilled in the art without creative work fall within the scope of protection of the present disclosure.

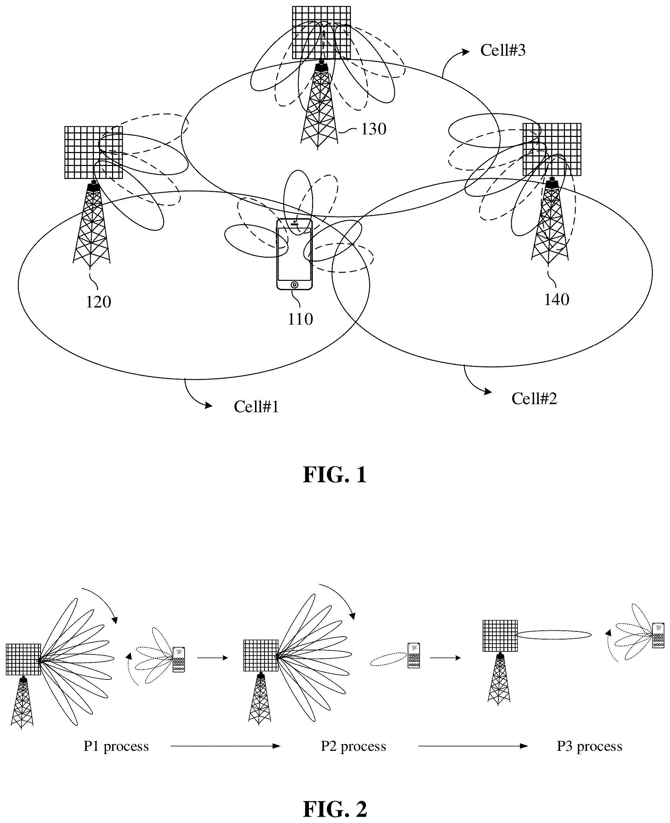

FIG. 1 is a schematic diagram of an application scenario according to an embodiment of the present disclosure.

As shown in FIG. 1, the communication system 100 may include a terminal (such as terminal 110 in FIG. 1) and a network device (such as network device 120, network device 130, and network device 140 in FIG. 1). The network device may communicate with the terminal through an air interface. For example, the network device 120, the network device 130, and the network device 140 may be located in different cells, or may serve different cells. For example, in the communication system 100, the network device 120 is located for cell # 1, the network device 130 is located for cell # 2, and the network device 130 is located for cell # 3. The terminal 110 may be located in one or more cells, for example, in the communication system 100, the terminal 110 is located for cell # 1. In this scenario, cell # 1 is the serving cell of the terminal 110, and cell # 2 and cell # 3 are non-serving cells of the terminal 110.

In FIG. 1, the union of beams (pairs) indicated by solid lines and dotted lines is a complete set of beams (pairs) between each cell and a terminal. The beams (pairs) indicated by solid lines are beams (pairs) that the terminal or network device need to measure, and the beams (pairs) indicated by dotted lines are beams (pairs) in the complete set of beams (pairs) but do not need to be measured by the terminal or network device.

It should be understood that the embodiments of the present disclosure are merely illustrated with reference to the communication system 100, but the embodiments of the present disclosure are not limited thereto. That is, the technical solution of the embodiments of the present disclosure can be applied to various communication systems, such as a Long Term Evolution (LTE) system, an LTE Time Division Duplex (TDD) system, a Universal Mobile Telecommunication System (UMTS), an Internet of Things (IoT) system, and a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 shown in FIG. 1, a network device (e.g., network device 120, network device 130, network device 140) may be an access network device that communicates with a terminal (e.g., terminal 110). An access network device may provide communication coverage for a particular geographic area and may communicate with terminals (e.g., UEs) located within that coverage area.

The network device may be an Evolutionary Node B (eNB or eNodeB) in a Long Term Evolution (LTE) system, or a Next Generation Radio Access Network (NG RAN) device, or a base station (gNB) in an NR system, or a radio controller in a Cloud Radio Access Network (CRAN); or the network device may be a macro base station, a micro base station (also referred to as a small station), a satellite, a Radio Network Controller (RNC), a Node B, a Base Station Controller (BSC), a Base Transceiver Station (BTS), a home base station (such as Home Evolved NodeB, or Home NodeB (HNB)), a Baseband Unit (BBU), or an Access Point (AP), a wireless relay node, a wireless backhaul node, a Transmission Point (TP) or a Transmission and Reception Point (TRP) in a Wireless Fidelity (WiFi) system, etc. The network device may also be a relay station, an access point, a vehicle-mounted device, a wearable device, a hub, a switch, a bridge, a router, or a network device in a future evolved Public Land Mobile Network (PLMN), or the like.

The terminal may be any terminal, including but not limited to a terminal that has a wired or wireless connection with a network device or other terminal.

For example, the terminal may refer to an access terminal, a User Equipment (UE), a user unit, a user station, a mobile station, a remote station, a remote terminal, a mobile device, a user terminal, a terminal, a wireless communication device, a user agent or a user device. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal in a 5G network, or a terminal in a future evolution network, or the like.

The terminal may be used for Device to Device (D2D) communication.

**It** should be understood that the specific forms of terminals and network devices are not particularly limited in the embodiments of the present disclosure, and are merely exemplary descriptions herein.

The wireless communication system 100 may further include a core network device (not shown in FIG. 1) that communicates with a network device, which may be a 5G Core (5GC) device, for example, an Access and Mobility Management Function (AMF), or for another example, an Authentication Server Function (AUSF), or for another example, a User Plane Function (UPF), or for another example, a Session Management Function (SMF). Alternatively, the core network device may also be an Evolved Packet Core (EPC) device of an LTE network, for example, a Session Management Function + Core Packet Gateway (SMF + PGW-C) device. It should be understood that the SMF + PGW-C can simultaneously implement functions that the SMF and PGW-C can implement. In the process of network evolution, the core network devices may be called by other names, or a new network entity may be formed by dividing the functions of the core networks, which is not limited by the embodiments of the present disclosure.

The various functional units in the communication system 100 may achieve communication by establishing a connection through a next generation network (NG) interface.

For example, the terminal establishes an air interface connection with an access network device through an NR interface for transmitting user plane data and control plane signaling. The terminal may establish a control plane signaling connection with an AMF through the NG interface 1 (N1 for short). An access network device, such as a next generation radio access base station (gNB), may establish a user plane data connection with a UPF through an NG interface 3 (N3 for short). The access network equipment may establish a control plane signaling connection with the AMF through an NG interface 2 (N2 for short). The UPF may establish a control plane signaling connection with an SMF through an NG interface 4 (referred to as N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with a PCF through an NG interface 7 (referred to as N7 for short).

FIG. 1 exemplarily shows three network devices and one terminal. Alternatively, the wireless communication system 100 may include one or more network devices, and another number of terminals may be included within the coverage of each network device, which is not limited by the embodiments of the present disclosure.

**It** should be noted that FIG. 1 only illustrates a system applicable to the present disclosure by way of example, and the method shown in the embodiment of the present disclosure can also be applied to other systems. Further, the terms "system" and "network" are often used interchangeably herein. Herein, the term "and/or" is only an association relationship describing associated objects, and means that there may be three relationships, for example, A and/or B may mean that A alone exists, A and B simultaneously exist, and B alone exists. In addition, the character "/" in this disclosure generally indicates that the related objects before and after are in an "or" relationship. It should also be understood that the "indicate" mentioned in the embodiments of the present disclosure may be a direct indication, an indirect indication, or an associated relationship. For example, A indicates B, which may mean that A directly indicates B, for example, B can be obtaind by A; or may mean that A indicates B indirectly, for example A indicates C, and B can be obtaind through C; or may indicate that there is an association relationship between A and B. It should also be understood that "correspond" mentioned in the embodiments of the present disclosure may indicate that there is a direct correspondence or indirect correspondence between the two, or may indicate that there is a correlation relationship between the two, or may indicate a relationship between indicating and being indicated, configuring and being configured, or the like. It should also be understood that the "predefined" or "predefined rules" mentioned in the embodiments of the present disclosure may be implemented by storing corresponding codes, tables, or other ways that can indicate relevant information in advance in devices (e.g., including terminals and network devices), and the present disclosure does not limit specific implementations thereof. For example, the "predefined" may refer to "defined" in a protocol. It should also be understood that in the embodiments of the present disclosure, the "protocol" may refer to a standard protocol in the field of communications, and may include, for example, an LTE protocol, an NR protocol, and related protocols applied to future communication systems, and the present disclosure does not limit thereto.

The conventional mobility scheme is based on measurement and is a reactive scheme, that is, the link quality will not be discovered until it degrades to a certain extent, thus triggering subsequent mobility management procedures, such as cell handover, but often has a certain latency. Therefore, a technical solution according to the embodiments of the present disclosure is proposed. According to the technical solution according to the embodiments of the present disclosure, the mobility scheme based on model prediction may predict the link performance of a plurality of future cells based on historical measurement results, thereby selecting a top cell, which belongs to a pro-active scheme and has a strong forward-looking view, so it can also save the latency of cell handover and reduce the risk of raido link failure. Therefore, a terminal can directly switch from a cell with good link quality to another cell with good link quality, without experiencing the performance degradation caused by untimely cell handover.

In order to facilitate understanding of the technical solution of the embodiments of the present disclosure, the related technologies of the embodiments of the present disclosure will be described below, and the related technologies below can be arbitrarily combined with the technical solution of the embodiments of the present disclosure as options, and all of them belong to the scope of protection of the embodiments of the present disclosure.

### 1. Beam Management of NR

The first version of an NR system (i.e. Rel. 15) introduces a communication with millimeter wave band, i.e. introducing a beam management mechanism. The beam management may include uplink and downlink beam management. The downlink beam management includes processes such as downlink Beam Sweeping (Beam Sweeping), UE beam Measurement and Reporting (Measurement & Reporting), and downlink Beam Indication (Beam Indication) of a Network (NW). The uplink beam management includes uplink beam sweeping (UE transmits beam sweeping SRS), NW beam measurement, and uplink beam indication and configuration for the UE.

FIG. 2 is a schematic diagram of an example of downlink beam management in an NR system. The downlink beam scanning process is taken as an example, which can be divided into three processes, namely P1, P2 and P3 processes. The P1 process refers to that a NW scans different transmit beams and a UE scans different receive beams; the P2 process means that the NW scans different transmit beams and the UE uses the same receive beam; and the P3 process means that the NW uses the same transmit beam and the UE scans different receive beams. Usually, the P1 process may be performed before the P2 and P3 processes, for example, in the example of FIG. 2, the order of execution may be P1, P2, and P3. In general, the NW completes the above-described beam scanning procedure by transmitting a downlink reference signal-synchronization signal and PBCH block (SSB) and/or a Channel State Information-Reference Signal (CSI-RS).

The beam reporting mechanism in NR Rel.15 includes that the UE measures a plurality of transmit beams (P2 process) or transmit-receive beam pairs (P1 process) to report L transmit beams having the highest L1-Reference Signal Receiving Power (L1-RSRP) and their qualities to the NW through Channel State Information (CSI). After decoding the beam information reported by the UE, the NW may take into account a downlink transmission channel and a signal, and carry a Transmission Configuration Indicator (TCI) State (including an SSB or CSI-RS resource index as a reference of the UE) through Media access control (MAC) and/or Downlink Control Information (DCI) signaling, thereby indicating the beam information to the UE. The UE performs downlink reception using a reception beam corresponding to the transmit beam of the indicated SSB or CSI-RS.

Accordingly, NR defines three uplink beam sweeping processes, namely U1, U2 and U3. The U1 process includes: UE scans different transmit beams, and NW scans different receive beams. The U2 process includes: the UE uses the same transmit beam and the NW scans different receive beams. The U3 process includes: the UE scans different transmit beams and the NW uses the same receive beam. For the uplink beam sweeping process, since the NW measures the beam from the UE, there is no need for the UE to perfrom beam reporting. The NW may select an appropriate uplink beam from the measured uplink beams and indicate or configure the same to the UE for uplink transmission. Correspondingly, the NW may prepare the corresponding receive beam.

### 2. Inter-Cell Beam Management of NR

Inter-cell beam management of NR is only applicable to downlink scenarios.

In the beam management of Rel.17, based on the capability reporting of the UE, the NW may configure and/or activate for the UE the beam management functions for non-serving cells, including beam measurement, beam reporting, and beam indication.

The UE may measure a non-serving cell other than a serving cell, and the non-serving cell has a different Physical Cell Identifier (PCI) from the serving cell. The number of measurable non-serving cells supported by UE capability is 1, 2, 3, or 7. By measuring the SSB of the non-serving cell, the UE can select a downlink beam with better beam quality. In one beam reporting, the UE can only report up to four downlink transmit beams from one non-serving cell, including the link quality and the resource index corresponding to the beams, such as L1-RSRP.

NW may implement a beam indication from a non-serving cell through a unified TCI State. For example, the NW may configure a reference signal from a non-serving cell (determining whether it is a non-serving cell through PCI) in the TCI State. If the TCI state is indicated to the UE, it means that the UE will use a downlink beam from the cell.

### 3. Layer 1/Layer 2 Triggered Mobility of NR

In Layer 1/Layer 2 (L1/L2) triggered mobility management of Rel.18, standardization gives enhancement in measurement and reporting relative to inter-cell beam management in Rel.17. Specifically, UE may perform measurements in a serving cell and a target cell configured by NW, and may provide measurement results of at most M × L downlink reference signals through one reporting, and the maximum values of M and L are determined based on the capability of the UE. The measurement for a large number of candidate cells requires a large amount of downlink reference signals and a latency required by the UE to measure these downlink reference signals, because the UE usually cannot measure multiple beams (pairs) of multiple candidate cells at the same time.

### 4. Neural Network (NN)

### 1) Neuronal Structure

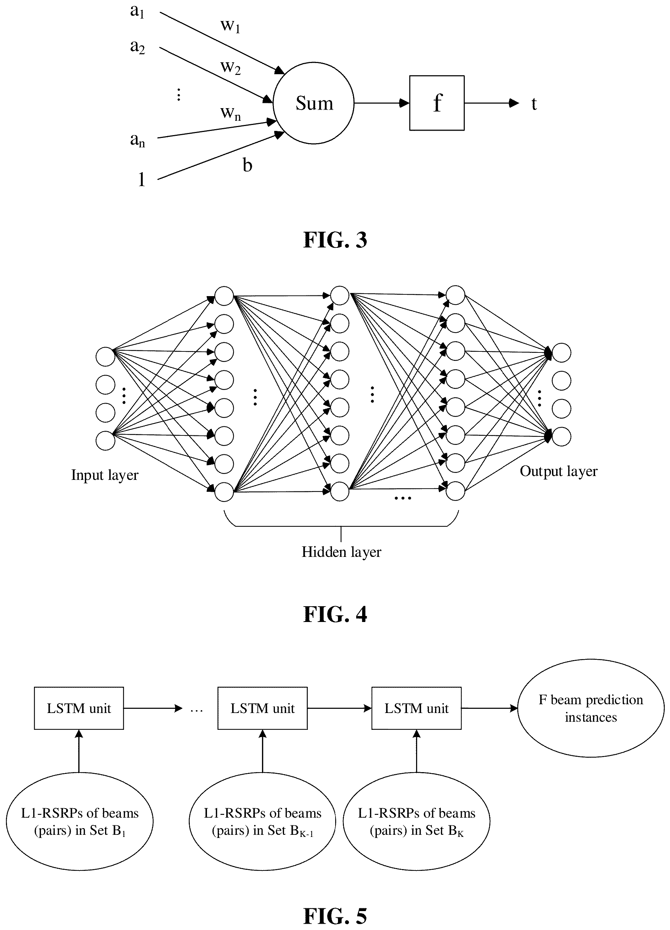

A neural network is an operation model composed of a plurality of neuron nodes connected to each other. The connection between the nodes represents a weighted value from an input signal to an output signal, called a weight; each node performs a weighted summation of different input signals and outputs the result through a specific activation function. The neuron structure is shown in Figure 3, where a₁, a₂,..., aₙ and 1 are the inputs of the neuron, w₁, w₂,..., wₙ and b represent the weights, Sum represents the summation function, f represents the activation function, and t is the output result.

### 2) Deep Neural Networks

FIG. 4 shows a simple neural network. The neural network includes an input layer, a hidden layer and an output layer. Through different connection methods of multiple neurons, combined with different weights and activation functions, different outputs may be generated, and then a mapping relationship from input to output can be fitted. Exemplarily, each upper-level node may be connected to all of its lower-level nodes, forming a fully connected model. This fully connected model may also be referred to as a Deep Neural Network (DNN). The NN model may be used to perform Spatial-domain DL beam prediction or Temporal DL beam prediction.

### 3) Long Short-Term Memory (LSTM) Model

FIG. 5 shows an LSTM model. The LSTM model can be understood as extending K times as input in time sequence, which is equivalent to a cascade of K LSTM units. The input of each LSTM unit is the L1-RSRP of a beam (pair) in Set Bₖ (1 ≤ k ≤ K), and Set Bₖ represents Set B corresponding to time k.

**It** should be noted that an index of a beam (pair) in Set Bₖ may be implicitly input by a fixed order of L1-RSRP. After completing the L1-RSRP input at K times, the LSTM model can predict beam prediction instances at the next F times. Each beam prediction instance includes a top beam (pair) index, the link quality corresponding to the top beam (pair) index, and a duration of the top beam (pair).

### 5. Obtaining of Model

An NN model can be trained through processes such as construction, training, verification and testing of a data set. In an embodiment of the present disclosure, it is assumed that all the NN models have been trained in advance by offline training or online training. It should be noted that offline training and online training are not mutually exclusive. For example, NW can first obtain a static training result through offline training of a data set, and this process can be called offline training. During the use of the NN by NW or UE, as the UE performs further measurment and/or reporting, the NN model may continue to collect more data and conduct real-time online training to optimize the parameters of the NN model, thereby achieving better inference and prediction results.

### 6. Artificial Intelligence (AI)/Machine Learning (ML) based beam management

AI/ML based beam management is the main case of the R18 AI project, and two cases are defined, namely, Spatial-domain DL beam prediction and Temporal DL beam prediction.

Definition of Spatial-domain beam prediction (BM-Case1) is: the downlink spatial-domain beam prediction in Set A is performed by measuring the beams (pairs) in Set B. Set B is either a subset of Set A, or Set B and Set A are two different sets of beams (pairs). Set B may be understood as a partial subset of beams (pairs); and Set A may be understood as a complete set of beams (pairs).

Definition of temporal beam prediction (BM-Case2) is: prediction of the optimal beams (pairs) is performed in Set A in future F times by measuring the beams (pairs) in Set B for K times. Set B can be a subset of Set A or the same as Set A. For the case where Set B and Set A are the same, the beam prediction is a simple beam prediction in the temporal domain; For the case where Set B is a subset of Set A, the beam prediction is a beam prediction in the spatial domain and the temporal domain.

Furthermore, Set B and Set A may also be two different sets, Set B being a set of small number of wide beams and Set A being a set of large number of narrow beams, and the small number of wide beams within Set B may spatially roughly cover the large number of narrow beams within Set A.

Hereinafter, a neural network model applicable to the embodiments of the present disclosure will be briefly introduced.

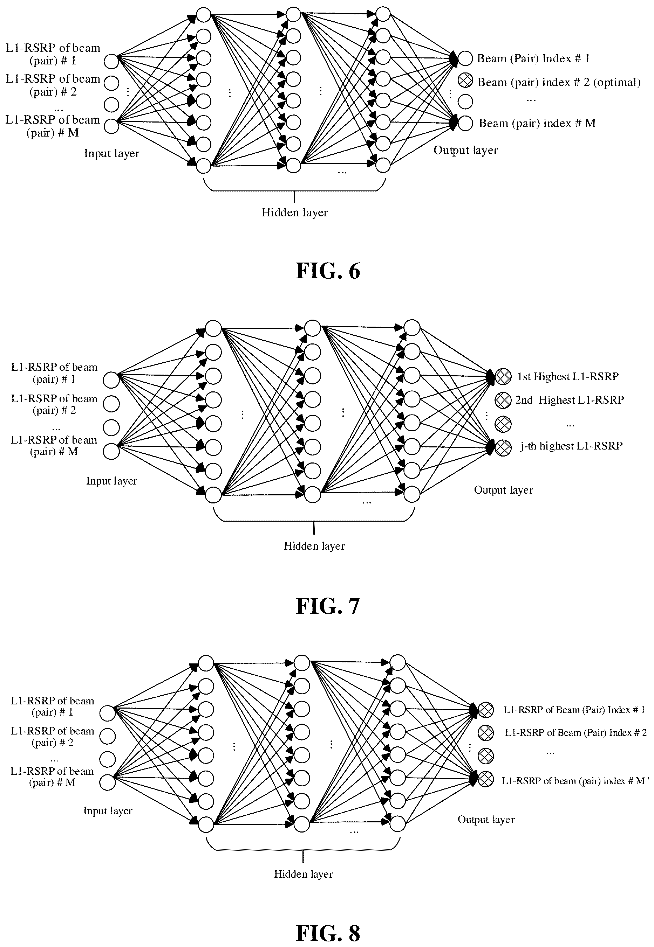

In the technical solution of the embodiments of the present disclosure, a DNN model may be used for temporal domain mobility prediction, or an LSTM model may be used for temporal domain mobility prediction in consideration of temporal factors. Although the technical solutions of the embodiments of the present disclosure are described using the DNN model as an example, the present disclosure is not limited thereto, and other models capable of realizing temporal domain mobility prediction (such as the LSTM model) are applicable to the technical solutions of the embodiments of the present disclosure. The implementation of the model will be described below by taking the DNN model shown in FIGS. 6 to 8 as an example.

FIG. 6 is a schematic diagram of an example of a neural network model applicable to an embodiment of the present disclosure. The model is a top beam (pair) prediction model, and it can be considered that the model solves a multi-classification problem. The model can be used to fit the relationship between the measurement results of Set B (such as the L1-RSRPs of reference signals/beams (pairs) in Set B) to top L beams (pairs) in Set A. The measurement results of Set B can be used as the input of the model, and the output can be indexes of the optimal J beams (pairs) selected from the complete set (Set A), that is, the J beams (pairs) with the highest L1-RSRP in Set A. In the example of FIG. 6, the number of beams (pairs) in Set B is M, the number of beams (pairs) in Set A is M ', J = 1, and beam (pair) # 2 is the beam (pair) having the highest L 1-RSRP, that is, the top beam (pair). The label used by the model is an index of the best (i.e. the highest L1-RSRP) beam (pair) measured in the complete set.

FIG. 7 is another schematic diagram of a neural network model applicable to an embodiment of the present disclosure, and the model is a best beam quality prediction model, which can be understood as a linear regression problem. The relationship between input and output of the model is: inputting L1-RSRPs from a partial subset to the best K beams (pairs). The input part of this model is the same as the input of that model shown in Fig. 6, except that the output of this model is J (J ≥ 1) best L1-RSRPs. In the example of FIG. 7, the number of beams (pairs) in Set B is M. The label used by this model is the best K L1-RSRPs measured in the complete set and the corresponding K beam (pair) indexes.

FIG. 8 is another schematic diagram of a neural network model applicable to an embodiment of the present disclosure. The model is a best beam quality and best beam index prediction model, and can be understood as a linear regression problem. The input part of this model is the same as the input of that model shown in FIG. 6, except that the output of this model is L1-RSRPs of all beams (pairs) in the complete set (Set A). By sorting the L1-RSRPs of all beams (pairs) from high to low, the best J (i.e. Top-J) L1-RSRPs can be selected, and then according to the output positions corresponding to the best J L1-RSRPs, the corresponding top J beam (pair) indexes can be found. Therefore, the model shown in FIG. 8 can realize the functions of the two models of FIG. 6 and FIG. 7.

As an implementation, the DNN model can be understood as two different models, using the same input (i.e. Set B) and having two different outputs, i.e., one output is indexes of best J (i.e. Top-J) beams (pairs), and the other is link qualities, i.e. L1-RSRPs, of best J (i.e. Top-J) beams (pairs), as shown in FIGS. 6 and 7. As another implementation, for the DNN model, the functions of the two models of FIGS. 6 and 7 can be realized by the single model, see FIG. 8.

**It** should be understood that the output of the model may also be understood as an inference or prediction result, that is, inference and prediction may have the same meaning and may be replaced with each other.

**In** order to facilitate understanding of the technical solutions of the embodiments of the present disclosure, the technical solutions of the present disclosure will be described in detail below with reference to specific examples. As an optional solution, the above related technologies can be arbitrarily combined with the technical solutions of the embodiments of the present disclosure, and all of them belong to the scope of protection of the embodiments of the present disclosure. Embodiments of the present disclosure include at least some of the following.

**It** should be noted that the "beam (pair)" in the embodiments of the present disclosure may refer to a beam, including a transmit beam or a receive beam, or may refer to a pair of beams, such as a pair of a transmit beam and a receive beam. The meaning of "beam (pair)" in the embodiments of the present disclosure is applicable to the case of downlink transmission. The "beam (pair)" in the embodiments of the present disclosure may also be referred to as a spatial filter, that is, the beam (pair) and the spatial filter may be replaced with each other.

**It** should be noted that the "downlink reference signal resource index" in the embodiments of the present disclosure may also be called a beam (pair) index, or a downlink reference signal index, or a spatial filter index, that is, a downlink reference signal resource index, a beam (pair) index, a downlink reference signal index, and a spatial filter index may be replaced with each other. Exemplarily, a downlink reference signal resource index may be a CSI-RS resource index (CRI) or an SSB resource index (SSBRI).

**It** is to be noted that the downlink reference signal in the embodiments of the present disclosure may include a Channel State Information-Reference Signal (CSI-RS) and/or an SSB. The measurement result obtained by measuring the downlink reference signal represents the link quality. In some implementations, the link quality may include at least one of: a Reference Signal Receiving Power (RSRP), such as L1-RSRP; a Signal to Interference plus Noise Ratio (SINR), such as L1-SINR; a Received Signal Strength Indicator (RSSI), such as L1-RSSI; or a Reference Signal Receiving Quality (RSRQ), such as L1-RSRQ.

First, a first downlink reference signal set and a second downlink reference signal set are defined.

The first downlink reference signal set is Set B or Set C (referred to as Set B/Set C), and the second downlink reference signal set is Set A. The "downlink reference signal set" may be understood as a set of downlink reference signals, a set of downlink reference signal resources, or a set of beams (pairs). Therefore, the "downlink reference signal set" may also be referred to as a "downlink reference signal resource set" or a "beam (pair) set".

**In** some scenarios, Set B may be a subset of Set A, and Set B may be understood as a partial subset of beams (pairs), and Set A may be understood as a complete set of beams (pairs). In other scenarios, Set B and Set A may also be two different sets of beams (pairs). Exemplarily, Set B may serve as a measurement set and Set A may serve as a prediction set. In the embodiments of the present disclosure, the neural network model (referred to as a model for short) may perform beam prediction for Set A by measuring the beams in Set B.

**In** some scenarios, Set B is a measurement set and is also an input set of a model. In other scenarios, Set C is a measurement set, and the top M beams (pairs) are selected from Set C to form Set B, and Set B is an input set of a model, that is, Set B is a subset of Set C.

**In** some implementations, the first downlink reference signal set may comprise N (N ≥ 1) first downlink reference signal subset(s). Each first downlink reference signal subset may correspond to a cell. It is understood that the first downlink reference signal set includes first downlink reference signal subsets of N cell(s). As an example, the n-th (1 ≤ n ≤ N) first downlink reference signal subset in Set B/Set C may be denoted as Set Bₙ/Set Cₙ. For example, the 1st first downlink reference signal subset in Set B/Set C may be denoted as Set B₁/Set C₁, and the index of Set B₁/Set C₁ is 1; the 2nd first downlink reference signal subset in Set B/Set C may be denoted as Set B₂/Set C₂, and the index of Set B₂/Set C₂ is 2; and so on. It should be understood that the order of the N first downlink reference signal subsets in Set B/Set C is exemplary, and the order may be changed, and the embodiments of the present disclosure is not limited thereto.

**In** some implementations, the second downlink reference signal set may include P (P ≥ 1) second downlink reference signal subsets, wherein each second downlink reference signal subset may correspond to one cell, it being understood that the second downlink reference signal set includes second downlink reference signal subsets of P cell(s). As an example, the p-th (1 ≤ p ≤ P) second downlink reference signal subset in Set A may be denoted as Set Aₚ. For example, the 1st second downlink reference signal subset in Set A may be denoted as Set A₁, and the index of Set A₁ is 1; the 2nd second downlink reference signal subset in Set A may be denoted as Set A₂, and the index of Set A₂ is 2; and so on. It should be understood that the order of the P second downlink reference signal subsets in Set A is exemplary, and the order may be changed, and the embodiments of the present disclosure is not limited thereto.

As an implementation, the value of N may be equal to the value of P. As another implementation, the value of N may be different from the value of P. Exemplarily, the value of N may be much smaller than the value of P, so that the number of downlink reference signals that need to be actually measured can be greatly reduced, thereby achieving the purpose of reducing computational overhead and latency.

Secondly, a first model is defined.

The first model is used for mobility prediction, and the first model may be a neural network model, such as the DNN model described above, or an LSTM model, etc. In the technical solutions of the embodiments of the present disclosure, a DNN model may be used for mobility prediction, or an LSTM model may be used for mobility prediction in consideration of temporal domain factors. Although the technical solutions of the embodiments of the present disclosure are described using the DNN model as an example, the present disclosure is not limited thereto, and other models capable of realizing temporal domain mobility prediction (such as the LSTM model) are applicable to the technical solutions of the embodiments of the present disclosure.

The first model is a trained model, and the top cell and the top beam (pair) within the top cell can be selected globally (from multiple cells and corresponding all beams (pairs)) by using the measurement results of limited historical beams (pairs).

As an implementation, the first model is a terminal-side model (which may also be referred to as a UE-side model), or the first model is a model deployed on the terminal side. The first model may implement beam prediction in the temporal domain, which may be a purely temporal domain beam prediction or a temporal domain and spatial domain beam prediction. As another implementation, the first model is a model on the network device side (which may also be referred to as a model on the NW side), or the first model is a model deployed on the network device side. The first model may implement beam prediction in the temporal domain, which may be a purely temporal beam prediction or a temporal and spatial beam prediction.

The input of the first model may be K (K ≥ 1) measurement instances, and different measurement instances correspond to different measurement time instances. Each measurement instance is obtained by the terminal by measuring the downlink reference signals in the first downlink reference signal set, that is, the measurement instance may be understood as a measurement result of Set B by the terminal or a partial measurement result of Set C (such as the measurement results of the top M beams (pairs) in Set C).

The output of the first model is F (F ≥ 1) prediction instance(s), different prediction instances correspond to different prediction time instances, and each prediction instance contains top L (L ≥ 1) cell index(es) in P (P ≥ 1) cell(s); and/or best J (J ≥ 1) beam (pair) index(es) in each best cell; and/or link quality corresponding to each best beam (pair) index.

The present disclosure does not limit the specific network structure of the first model. The neural network model may also be referred to as an AI model or an ML model.

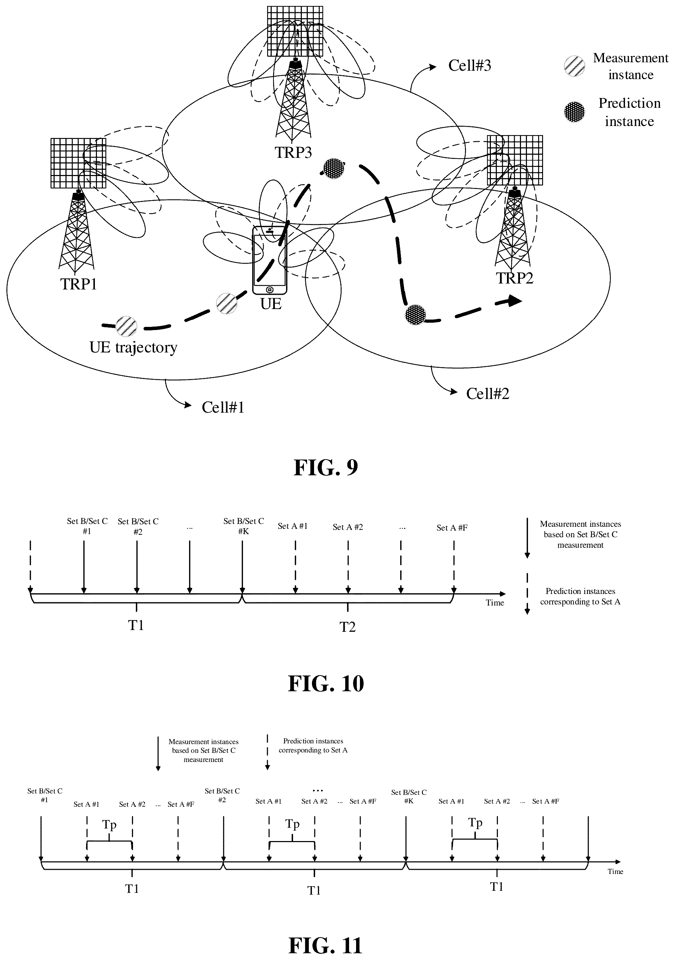

Exemplarily, FIG. 9 is a schematic diagram of a temporal domain mobility measurement and prediction according to an embodiment of the present disclosure. In FIG. 9, the coverage range of TRP1 is cell # 1, the coverage range of TRP2 is cell # 2, and the coverage range of TRP3 is cell # 3. Assuming that a UE is roaming in multiple cells (Cell # 1, Cell # 2, Cell # 1) at a certain speed, the trajectory of the UE movement is shown by the dashed line. The UE performs measurement at K (K ≥ 1) measurement time instance(s) to obtain K measurement instance(s), and predicts future F (F ≥ 1) prediction instance(s) according to the K measurement instance(s) through the first model, and each prediction instance includes: top L (L ≥ 1) cell index(es), and/or top J (J ≥ 1) beam (pair) index(es) for each top cell, and/or link quality corresponding to each top beam (pair), such as L1-RSRP. FIG. 9 shows two measurement instances (i.e. K = 2) and two prediction instances (i.e. F = 2). In FIG. 9, the UE performs two measurements for the measurement set (i.e. Set B/Set C) for cell # 1 to obtain two measurement instances; two prediction instances are predicted for the prediction set (i.e. Set A) according to the two measurement instances through the first model; the reference signal actually measured by the UE is represented by a solid ellipse, and the reference signal not measured but in the prediction set (i.e. Set A) is represented by a dashed ellipse.

In the embodiments of the present disclosure, a measurement time instance corresponding to a measurement instance and a prediction time instance corresponding to a prediction instance may satisfy a certain temporal relationship.

In some implementations, measurement time instance(s) corresponding to K measurement instance(s) is (are) within a first duration, and prediction time instance(s) corresponding to F prediction instance(s) is (are) within a second duration, and the second duration does not overlap with the first duration.

Exemplarily, FIG. 10 schematically illustrates a temporal relationship (which may be referred to as a temporal relationship of type 1) between a measurement instance and a prediction instance, and the terminal performs K measurement(s) for Set B/Set C within T1 duration to obtain K measurement instance(s). F prediction instance(s) within T2 duration can be predicted based on the K measurement instance(s).

In other implementations, the measurement time instance(s) corresponding to the K measurement instance(s) is (are) within the K first durations, and the prediction time instance(s) corresponding to the F prediction instance(s) is (are) within the last first duration of the K first durations.

Exemplarily, FIG. 11 schematically illustrates another temporal relationship (which may be referred to as a temporal relationship of type 2) of a measurement instance and a prediction instance. The terminal performs K measurement(s) for Set B/Set C over K T1 durations over K T1 durations to obtain K measurement instance(s), and a T1 duration is performed per T1 duration. F prediction instance(s) within the last T1 duration of the K T1 durations can be predicted based on the K measurement instance(s).

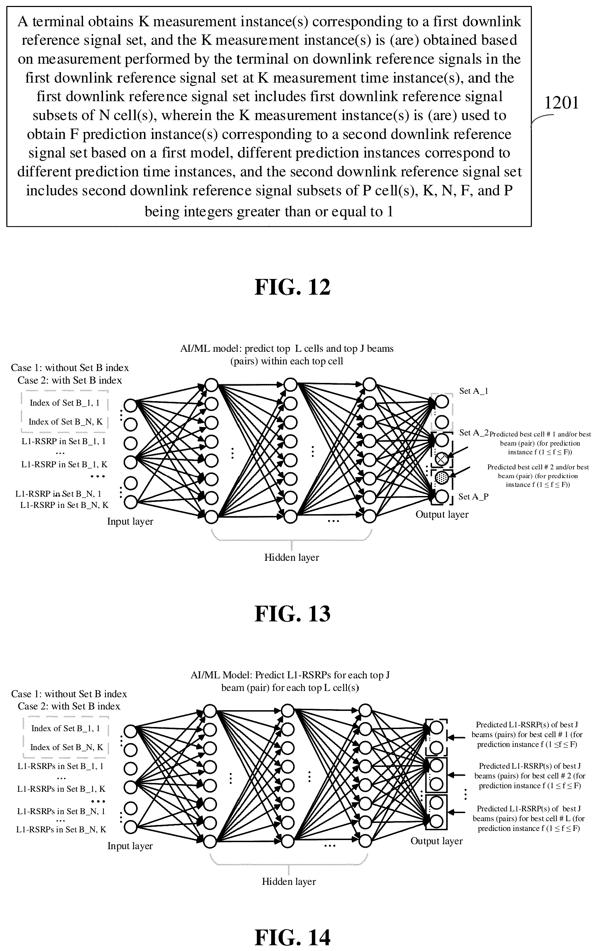

FIG. 12 is a schematic flow diagram of a temporal domain mobility prediction method according to an embodiment of the present disclosure, and as shown in FIG. 12, the method includes the following steps.

Step 1201 includes that: a terminal obtains K measurement instance(s) corresponding to a first downlink reference signal set, and the K measurement instance(s) is (are) obtained based on measurement performed by the terminal on downlink reference signals in the first downlink reference signal set at K measurement time instance(s), and the first downlink reference signal set includes first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s), K, N, F, and P being integers greater than or equal to 1.

Here, each measurement time instance may correspond to an index, referred to as a measurement time instance index; and each measurement instance may correspond to an index, which is called a measurement instance index. In some descriptions, the "measurement time instance index" and the "measurement instance index" may be replaced with each other.

Here, each prediction time instance may correspond to an index, which is referred to as a prediction time instance index; and each prediction instance may correspond to an index, which is called a prediction instance index. In some descriptions, "prediction time instance index" and "prediction instance index" may be replaced with each other.

For convenience of description, in the following examples, the first downlink reference signal set may be referred to as Set B/Set C, and the second downlink reference signal set may be referred to as Set A, where the first downlink reference signal set may also be referred to as a measurement set and the second downlink reference signal set may also be referred to as a prediction set. Relevant understanding of Set A, Set B, and Set C can be referred to the foregoing related descriptions. A downlink reference signal (or referred to as a downlink reference signal resource) may include, for example, a CSI-RS (or referred to as a CSI-RS resource) and/or an SSB (or referred to as an SSB resource).

### Configuration of Downlink Reference Signal Set

A network device may configure the first downlink reference signal set and/or the second downlink reference signal set for the terminal. The network device may send first configuration information and/or second configuration information to the terminal. The terminal may receive the first configuration information and/or the second configuration information from the network device. The first configuration information is used to configure a first downlink reference signal set. The second configuration information is used to configure a second downlink reference signal set.

As an implementation, the first configuration information and/or the second configuration information are/is carried in RRC signaling.

**In** some implementations, the first configuration information is further used to configure first temporal domain information corresponding to the first downlink reference signal set, and the first temporal domain information is used to determine K measurement time instance(s) corresponding to K measurement instance(s). In some implementations, the first temporal domain information includes at least one of: a measurement period, a first offset, and K which is the number of the K measurement time instance(s).

Exemplarily, the network device uses RRC signaling to configure Set B/Set C for the terminal. The Set B/Set C includes N (N ≥ 1) first downlink reference signal subset(s), each first downlink reference signal subset may correspond to a cell. As an example, the n-th (1 ≤ n ≤ N) first downlink reference signal subset in Set B/Set C may be denoted as Set Bₙ/Set Cₙ. The downlink reference signal (or referred to as a downlink reference signal resource) in Set B/Set C may include, for example, CSI-RS (or referred to as a CSI-RS resource) and/or SSB (or referred to as a SSB resource) for mobility. The network device may also configure the measurement period, the offset, and the number K of measurement time instances of Set B/Set C using RRC signaling, so that the terminal can know at which time instances the measurements are made, and then the measurement results are stored as an input to the first model. For Set Bₙ/Set Cₙ, Set Bₙ/Set Cₙ corresponding to measurement time instance k (1 ≤ k ≤ K) may be denoted as Set B_{n, k}/Set C_{n, k}. For example, Set Bₙ/Set Cₙ corresponding to measurement time instance 1 may be denoted as Set B_{n, 1}/Set C_{n, 1} which may have an index of {n, 1}; and Set Bₙ/Set Cₙ corresponding to measurement time instance 2 may be denoted as Set B_{n, 2}/Set C_{n, 2} which may have an index of {n, 2}; and so on.

In some implementations, the second configuration information is further used to configure second temporal domain information corresponding to the second downlink reference signal set, and the second temporal domain information is used to determine F prediction time instance(s) corresponding to F prediction instance(s). In some implementations, the second temporal domain information includes at least one of: a prediction period, a second offset, and F which is the number of the F prediction time instance(s).

Exemplarily, the network device uses RRC signaling to configure Set A for the terminal. Set A includes P (P ≥ 1) second downlink reference signal subset(s), each second downlink reference signal subset may correspond to a cell. As an example, the p-th (1 ≤ p ≤ P) second downlink reference signal subset in Set A may be denoted as Set Aₚ. The downlink reference signal (alternatively referred to as a downlink reference signal resource) in Set A may include, for example, a CSI-RS (alternatively referred to as a CSI-RS resource) and/or an SSB (alternatively referred to as an SSB resource) for mobility. The network device may also configure the measurement period, the offset, and the number F of measurement time instances of Set A using RRC signaling, so that the terminal can know at which time instances to make the predictions. For Set Aₚ, the Set Aₚ corresponding to the prediction time instance f (1 ≤ f ≤ F) may be denoted as Set A_{p, f}. For example, the Set Aₚ corresponding to the prediction time instance 1 may be denoted as Set A_{p, 1}, and the index of Set A_{p, 1} is {p, 1}; the Set Aₚ corresponding to the prediction time instance 2 may be denoted as Set A_{p, 2}, and the index of Set A_{p, 2} is {p, 2}; and so on.

**In** some implementations, the first configuration information and/or the second configuration information described above are related to capability information of the terminal. The network device may configure the first downlink reference signal set and/or the second downlink reference signal set for the terminal according to the capability information of the terminal.

### Reporting of Terminal's Capability

Different terminals have different capabilities for measurement and/or prediction, so the terminals need to report their measurement and/or prediction related capabilities.

**In** some implementations, a terminal transmits capability information of the terminal to a network device, the network device receives the capability information of the terminal from the terminal, and the capability information of the terminal includes at least one of the following:
first information, for indicating whether the terminal supports temporal domain mobility measurement and/or prediction;
second information, for indicating at least one of: a maximum number of cells supported by the terminal to be measured on all downlink carrier components (CCs) or bandwidth parts (BWPs); a maximum number of first downlink reference signal subsets supported by the terminal to be configured on all downlink CCs or BWPs; or a maximum number of first downlink reference signal subsets supported by the terminal to be measured on all downlink CCs or BWPs;
third information, for indicating at least one of: a maximum number of cells supported by the terminal to be predicted on all downlink CCs or BWPs; a maximum number of second downlink reference signal subsets supported by the terminal to be configured on all downlink CCs or BWPs; or a maximum number of first downlink reference signal subsets supported by the terminal to be predicted on all downlink CCs or BWPs;
fourth information, for indicating at least one of: a maximum number of cells supported by the terminal to be measured on on each downlink CC or BWP; a maximum number of first downlink reference signal subsets supported by the terminal to be configured on each downlink CC or BWP; or a maximum number of first downlink reference signal subsets supported by the terminal to be measured on each downlink CC or BWP;
fifth information, for indicating at least one of: a maximum number of cells supported by the terminal to be predicted on each downlink CC or BWP; a maximum number of second downlink reference signal subsets supported by the terminal to be configured on each downlink CC or BWP; or a maximum number of second downlink reference signal subsets supported by the terminal to be predicted on each downlink CC or BWP;
sixth information, for indicating a maximum number of downlink reference signals supported by the terminal to be measured within each first downlink reference signal subset;
seventh information, for indicating a maximum number of downlink reference signals supported by the terminal to be predicted within each second downlink reference signal subset;
eighth information, for indicating the number of measurement time instances supported by the terminal; or
ninth information, for indicating the number of prediction time instances supported by the terminal.

The above-described first information indicated capability may be denoted as capability 1; similarly, the second information indicated capability may be denoted as capability 2; the third information indicated capability may be denoted as capability 3; the fourth information indicated capability may be denoted as capability 4; the fifth information indicated capability may be denoted as capability 5; the sixth information indicated capability may be denoted as capability 6; the seventh information indicated capability may be denoted as capability 7; the eighth information indicated capability may be denoted as capability 8; and the ninth information indicated capability may be denoted as capability 9.

Exemplarily, the capability 1 may be understood as whether the terminal supports temporal-domain mobility measurement and/or prediction of the terminal-side model. Alternatively, the capability 1 may be understood as whether the terminal supports temporal-domain mobility measurement and/or prediction of the network-side model.

Exemplarily, the capability 2 may be understood as at most how many cells the terminal can support to be measured on all downlink CCs or BWPs, or at most how many first downlink reference signal subsets the terminal can support to be configured on all downlink CCs or BWPs, or at most how many first downlink reference signal subsets the terminal can support to be measured simultaneously on all downlink CCs or BWPs.

Exemplarily, the capability 3 may be understood as at most how many cells the terminal can support to be measured on all downlink CCs or BWPs, or at most how many second downlink reference signal subsets the terminal can support to be configured on all downlink CCs or BWPs, or at most how many second downlink reference signal subsets the terminal can support to be simultaneously predicted on all downlink CCs or BWPs.

Exemplarily, the capability 4 may be understood as at most how many cells the terminal can support to be measured on each downlink CC or BWP, or at most how many first downlink reference signal subsets the terminal can support to be configured on each downlink CC or BWP, or at most how many first downlink reference signal subsets the terminal can support to be measured simultaneously on each downlink CC or BWP.

Exemplarily, the capability 5 may be understood as at most how many cells the terminal can support to be predicted on each downlink CC or BWP, or at most how many second downlink reference signal subsets the terminal can support to be configured on each downlink CC or BWP, or at most how many second downlink reference signal subsets the terminal can support to be simultaneously predicted on each downlink CC or BWP.

Exemplarily, the capability 6 may understand as at most how many downlink reference signals the terminal can support to be measured within each first downlink reference signal subset.

Exemplarily, the capability 7 may understand as at most how many downlink reference signals the terminal can support to be predicted within each second downlink reference signal subset.

Exemplarily, the capability 8 may understand as at most how many measurement time instances, i.e. the value of K, the terminal can support to be measured.

Exemplarily, the capability 9 may understand as at most how many prediction time instance(s), i.e. the value of F, the terminal can support to be predicted.

In some implementations, the capability information of the terminal includes the above-described first information, and optionally, in a case where the first information indicates that the terminal supports temporal domain mobility measurement and/or prediction, the capability information of the terminal may include at least one of the above-described second to ninth information.

In some implementations, the capability information of the terminal includes at least one of the first information to the ninth information described above.

### Temporal-domain mobility measurement

For each of the K measurement time instances, the terminal measures, through the physical layer, a downlink reference signal (or a downlink reference signal resource) within the first downlink reference signal set, such as an SSB (or an SSB resource) and/or a CSI-RS (or a CSI-RS resource for mobility). The n-th (1 ≤ n ≤ N) first downlink reference signal subset measured at the k-th (1 ≤ k ≤ K) measurement time instance may be denoted as Set B_{n,k}/Set C_{n,k}, the index of Set B_{n, k}/Set C_{n, k} is {n, k}, n represents the first downlink reference signal subset index, and k represents the measurement time instance index. N first downlink reference signal subsets may correspond to N cell(s), each first downlink reference signal subset may correspond to a cell, and thus, the first downlink reference signal subset index may correspond to a cell index, which may be, for example, the cell index may be a Physical Cell Identifier (PCI), a PCI index, or a configuration index of cell. That is, the first downlink reference signal subset index, the PCI, the PCI index, and the configuration index of cell may be replaced with each other.

N cell(s) may include one current serving cell (e.g., SpCell) and (N - 1) candidate cells. Here, the current serving cell may also be understood as a candidate cell, and based on such understanding, N cell(s) may be described as N candidate cells.

### Input and output of model

The first model is used for mobility prediction, and the first model may be a neural network model, such as the DNN model described above, or an LSTM model, etc. In the technical solutions of the embodiments of the present disclosure, a DNN model may be used for mobility prediction, or an LSTM model may be used for mobility prediction in consideration of temporal domain factors. Although the technical solutions of the embodiments of the present disclosure are described using the DNN model as an example, the present disclosure is not limited thereto, and other models capable of realizing temporal domain mobility prediction (such as the LSTM model) are applicable to the technical solutions of the embodiments of the present disclosure.

### 1) Input of the Model

The input of the first model includes K measurement instance(s), and the input of the K measurement instance(s) can be implemented in following two manners:
First manner is that: K measurement instance(s) include(s): K × N set(s) of link qualities.
Second manner is that: K measurement instance(s) include(s): K x N index(es) and K x N set(s) of link qualities, there is a correspondence relationship between the K x N index(es) and K x N link quality(ies), and each of the K x N index(es) corresponds to a measurement time instance index and a cell index.

Here, for a measurement instance, the terminal performs measurement on N downlink reference signal subset(s) in the first downlink reference signal set to obtain N set(s) of link qualities, and each downlink reference signal subset corresponds to a set of link qualities. Assuming that a downlink reference signal set includes M (M ≥ 1) downlink reference signals, then each set of link qualities includes M link quality(ies). For K measurement instance(s), K × N set(s) of link qualities can be obtained, where each set of link qualities includes M link quality(ies). For example, the terminal measures all Set B_{n, k}/Set C_{n, k} (1 ≤ n ≤ N, 1 ≤ k ≤ K) and obtains K × N set(s) of link qualities, wherein the nth (1 ≤ n ≤ N) first downlink reference signal subset measured at the k-th(1 ≤ k ≤ K) measurement time instance is denoted as Set B_{n, k}/Set C_{n, k}, the index of Set B_{n, k}/Set C_{n, k} is {n, k}, n represents the first downlink reference signal subset index, and k represents the measurement time instance index.

Here, each link quality corresponds to a downlink reference signal resource index (e.g. a CRI or a SSBRI), a first downlink reference signal subset index (e.g. n-index), and a measurement time instance index (e.g. k-index). The first downlink reference signal subset index may also be replaced with a cell index (e.g., a PCI, a PCI index, a configuration index of cell, etc.), that is, the first downlink reference signal subset index and the cell index (e.g., a PCI, a PCI index, a configuration index of cell, etc.) may be replaced with each other.

In the above-described first manner, as shown in case 1 in FIGS. 13 to 15, K × N set(s) of link qualities (that is, link qualities of all downlink reference signals in Set B_{n, k}/Set C_{n, k}) are input to the first model in a fixed order, and the order is related to indexes corresponding to link qualities. The index corresponding to link quality includes a downlink reference signal resource index, a first downlink reference signal subset index, and a measurement time instance index. In the above-described first manner, since it is not necessary to input the index corresponding to the link quality to the first model, the amount of data input to the model can be saved.

In the second manner described above, as shown in case 2 in FIGS. 13 to 15, the input of the first model includes K × N set(s) of link qualities (i.e., link qualities of all downlink reference signals in Set B_{n, k}/Set C_{n, k}) corresponding to K x N index(es), and each of K x N index(es) corresponds to a measurement time instance index (e.g., k index) and a cell index (e.g., a PCI, a PCI index, a configuration index of cell, etc.), wherein the cell index may also be replaced with a first downlink reference signal subset index (e.g., n index). In the second manner, since the index corresponding to the link quality is input to the first model, different combinations of Set B_{n, k}/Set C_{n, k} can be flexibly selected as the input of the model.

### 1) Output of the Model

The output of the first model includes F prediction instance(s). In some implementations, each of the F prediction instance(s) includes at least one of: index(es) of top L cell(s) among P cell(s); index(es) of top J downlink reference signal resource(s) for each top cell; or a link quality corresponding to each top downlink reference signal resource index. In some implementation, each prediction instance further includes a prediction time instance index corresponding to the prediction instance.

Exemplarily, each prediction instance includes a prediction time instance index, and top L (L ≥ 1) cell index(es) among P (P ≥ 1) cell(s); and/or top J (J ≥ 1) beam (pair) index(es) for each top cell; and/or a link quality corresponding to each top beam (pair) index.

The output of the F prediction instance(s) can be implemented in two manners.

First manner is that: the first model includes two models, namely Model 1 and Model 2. The output of Model 1 includes: top L cell index(es) among P cell(s) corresponding to each of F prediction instance(s), and top J downlink reference signal resource index(es) for each top cell. The output of Model 2 includes: the link quality corresponding to each top beam (pair) index corresponding to each of the F prediction instance(s).

Second manner is that: the first model is a model. The output of the model includes: top L cell index(es) among P cell(s) corresponding to each of F prediction instance(s), top J downlink reference signal resource index(es) for each top cell, and link quality corresponding to each top beam (pair) index.

**In** the above-described first manner, as shown in FIG. 13, the model 1 infers the top L cell index(es) corresponding to all the prediction time instance(s) f (1 ≤ f ≤ F) and the top J downlink reference signal resource index(es) for each top cell. As shown in FIG. 14, Model 2 infers the link quality corresponding to each best beam (pair) index for each best cell corresponding to the prediction time instance f (1 ≤ f ≤ F).

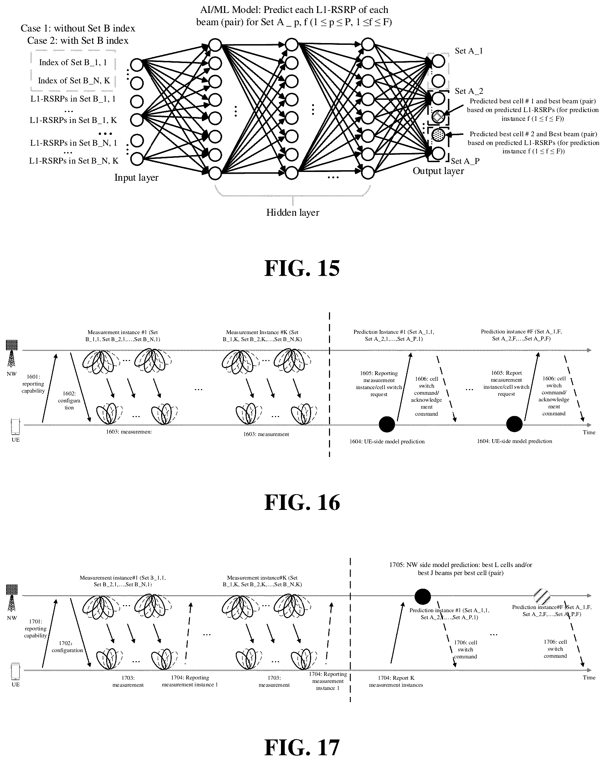

**In** the second manner described above, as shown in FIG. 15, the model predicts the link qualities of all the Set A_{p, f} (1 ≤ p ≤ P, 1 ≤ f ≤ F). For each prediction instance among the F prediction instance(s), top L cell index(es), top J downlink reference signal resource indexes for each top cell, and link quality corresponding to each best beam (pair) index is selected according to the order of link quality from high to low.

**In** the embodiments of the present disclosure, the first model responsible for mobility prediction may be deployed on the terminal side or on the network device side. Hereinafter, the technical solutions of the embodiments of the present disclosure will be described in conjunction with these two deployment methods.

### The model is located on the terminal side

**In** some implementations, the first model in the above scheme is on the terminal side. Here, after obtaining K measurement instance(s), the terminal predicts F prediction instance(s) based on the local first model.

In some implementations, the terminal transmits F prediction instance(s) to the network device.

In some implementations, the manner of reporting the F prediction instances includes at least one of followings: periodic reporting, semi-persistent reporting, aperiodic reporting, and layer 1 and/or layer 2 based mobility event reporting.

### 1) Periodic/semi-persistent/aperiodic reporting

In some implementations, for periodic reporting or semi-persistent reporting, before the terminal transmits F prediction instance(s) to the network device, the network device transmits third configuration information to the terminal, and the terminal receives the third configuration information from the network device, the third configuration information being used to configure a reporting period and a reporting offset corresponding to the periodic reporting or semi-persistent reporting.

In some implementations, the third configuration information may be carried in RRC signaling.

Here, the terminal periodically or semi-persistently reports the number F of the prediction time instance(s) and the prediction instance(s) corresponding to F prediction time instance(s) according to the reporting period and the reporting offset configured by the network device. For periodic reporting, once the terminal obtains the measurement configuration (such as the first configuration information and/or the second configuration information) and the reporting configuration (such as the third configuration information) from the network device, the terminal may periodically report the prediction instance(s). For semi-persistent reporting, after obtaining the measurement configuration and the reporting configuration, the terminal also needs to obtain an instruction to activate the configuration, and after obtaining the instruction to activate the configuration, the terminal may periodically report the prediction instance(s).

In some implementations, for aperiodic reporting, before the terminal transmits the F prediction instance(s) to the network device, the terminal receives first Downlink Control Information (DCI) from the network device, and the first DCI is used to trigger the aperiodic reporting.

Here, for aperiodic reporting, after obtaining the measurement configuration (such as the first configuration information and/or the second configuration information) and the reporting configuration (such as the third configuration information), the terminal further needs to obtain an instruction to trigger measurement and reporting, and the network device may trigger the terminal through DCI (that is, a trigger instruction) to perform measurement and reporting, and after obtaining the trigger instruction, the terminal performs measurement of the K measurement instance(s) and reporting of the F prediction instance(s).

### 2) Mobility Event Reporting Based on Layer 1 and/or Layer 2

In some implementations, before the terminal transmits the F prediction instance(s) to the network device, the terminal determines that a mobility event of layer 1 and/or layer 2 is triggered, and sends a reporting request to the network device; and the terminal receives second DCI from the network device, the second DCI being used for scheduling a Physical Uplink Shared Channel (PUSCH) for reporting. Further, the terminal transmits the F prediction instance(s) using the PUSCH.

Exemplarily, at part or all of the prediction time instance(s) f (1 ≤ f ≤ F), the output of the first model on the terminal side triggers a layer 1 and/or layer 2 based mobility event, and the terminal sends a reporting request to the network device, the reporting request being used to request resources for mobility reporting. The network device agrees to the reporting request of the terminal, sends DCI, and schedules a PUSCH through the DCI. The terminal carries mobility-related reporting content, that is, the prediction instance(s), through the PUSCH scheduled by the DCI.

In some implementations, the mobility event of layer 1 and/or layer 2 described above includes at least one of the following:
a first event, which is that: at part or all of the F prediction time instance(s), a predicted link performance of a current serving cell is higher than a first threshold or lower than a second threshold;
a second event, which is that: the predicted link performance of the current serving cell is higher or lower than a predicted link performance of a candidate cell plus an offset at part or all of the F prediction time instance(s);
a third event, which is that: the predicted link performance of the candidate cell is higher than a third threshold or lower than a fourth threshold at part or all of the F prediction time instance(s); or
a fourth event, which is that: the predicted link performance of the current serving cell is lower than the fifth threshold and the predicted link performance of the candidate cell is higher than the sixth threshold at part or all of the F prediction time instance(s).

In the above scheme, the current cell is a cell among the P cell(s), and the candidate cell is a cell other than the current cell among the P cell(s). The current cell may also be referred to as a current serving cell, and the current cell may also be understood as a candidate cell in the mobility management process.

The terminal determines whether or not the mobility event of the layer 1 and/or the layer 2 occurs (or is triggered) based on the above-defined mobility event of the layer 1 and/or the layer 2 and the prediction result of the first model, thereby autonomously selecting whether or not to report the F prediction instance(s).

For example, at a certain prediction time instances f, when the best cell output by the first model is still the current serving cell of the terminal, the terminal does not need to report the prediction instance or trigger a subsequent mobility operation.

Exemplarily, at a certain prediction time instance f, when the best cell output by the first model is a candidate cell and the performance is better than the current serving cell by an offset (e.g., 6 dB), the terminal may determine that the second event occurs and trigger the terminal to make a reporting request, the reporting request may be carried by Uplink Control Information (UCI), the network device schedules a PUSCH for the reporting request through DCI, and the terminal sends a prediction instance using the PUSCH.

For example, in all prediction time instance(s) f, when the best cell output by the first model is a candidate cell and the performance is higher than a specific threshold (for example, L1-RSRP is higher than - 50 dBm), the terminal may determine that the third event occurs and trigger the terminal to make a reporting request, the reporting request may be carried by UCI, the network device schedules a PUSCH for the reporting request through DCI, and the terminal sends a prediction instance using the PUSCH.

In the embodiments of the present disclosure, for the prediction result of the first model (that is, F prediction instance(s)), each prediction instance includes an index of a top cell selected from all Set A_{p, f} (1 ≤ p ≤ P, 1 ≤ f ≤ F), and/or a top beam (pair) index of the top cell, and/or a link quality corresponding to the top beam (pair) index; and the terminal reports the prediction result to the network device in one or more reports. For the index of the top cell, the terminal may report a cell index of the top cell or an index of Set A_{p, f} corresponding to the top cell (i.e., a p index), wherein the cell index may be a PCI, a PCI index, or a configuration index of a candidate cell. For the top beam (pair) index of the top cell, a downlink reference signal resource index in the NR system, such as SSBRI or CRI, may be used. For link quality, L1-RSRP is taken as an example in some examples, and other link quality indicators such as L1-SINR, L1-RSSI, L1-RSRQ, or CQI are not excluded.

In order to carry the temporal domain prediction reporting of mobility, the technical solutions of the embodiments of the present disclosure propose the following reporting formats.
A) In some implementations, a granularity of reporting the F prediction instance(s) is one prediction instance.

In some implementations, the reporting has a first format, the first format including: a prediction time instance index, L cell index(es), X1 downlink reference signal resource indexes, and X1 link qualities. The L cell index(es) are the index(es) of top L cell(s) among the P cell(s); the X1 downlink reference signal resource indexes include index(es) of top J downlink reference signal resource(s) in each of the L cell(s); the X1 link qualities have a correspondence relationship with the X1 downlink reference signal resource indexes.

Here, the cell index may be a PCI, a PCI index, a configuration index of a candidate cell, or an index of Set A (i.e., p-index).

Here, the downlink reference signal resource index may also be replaced with a beam (pair) index, a downlink reference signal index or a spatial filter index.

Here, the X1 link qualities may be reported in a differential manner or may be reported in a non-differential manner. In the case of reporting in a differential manner, the X1 link qualities are represented by a reference link quality and X1-1 difference values. For example, the reference link quality may be the best link quality among the X1 link qualities, the difference value and the reference link quality may determine a link quality, and the X1-1 difference values and the reference link quality may determine the X1-1 link qualities. Further, the reporting format may further include a downlink reference signal resource index corresponding to the reference link quality. In the case of non-differential reporting, the X1 link qualities are directly expressed by X1 link qualities.

As an example, the reporting format for the prediction instance is given below. A downlink reference signal resource index (a CRI or a SSBR) or a beam (pair) index may be replaced with a downlink reference signal index or a spatial filter index.

In Table 1 below, the reporting format for the prediction instance corresponding to the f-th prediction time instance is given, and X1 link qualities are reported in a differential manner. In Table 1, the reporting format includes a prediction time instance index, i.e. the value of f. In addition, for the optimal L cell index(es) at the prediction time, the PCI, the PCI index, the configuration index of a candidate cell, or the index of the corresponding Set A (i.e., the p value) may be directly reported. For a downlink transmit beam, the best beam (pair) index may be represented by a conventional CRI or SSBRI; and for a downlink transmit/receive beam pair, the best beam (pair) index may be represented by a beam (pair) index.

**Table 1: Reporting of Mobility Prediction at f-th Prediction Time instance**

| CSI Report Number | CSI Fields |
|---|---|
| CSI Report # n | Prediction instance #f, if reported |
| | PCI/PCI index/Candidate Cell Configuration index/Set A index # 1, if reported |
| | PCI/PCI index/Candidate Cell Configuration index/Set A index # 2, if reported |
| | ... |
| | PCI/PCI index/Candidate Cell Configuration index/Set A index # L, if reported |
| | CRI/SSBRI/beam (pair) index # 1 for cell # 1, if reported |
| | CRI/SSBRI/beam (pair) index # 2 for cell # 1, if reported |
| | ... |
| | CRI/SSBRI/beam (pair) index # J for cell # 1, if reported |
| | ... |
| | CRI/SSBRI/beam (pair) index # 1 for cell # L, if reported |
| | CRI/SSBRI/beam (pair) index # 2 for cell # L, if reported |
| | ... |
| | CRI/SSBRI/beam (pair) index # J for cell # L, if reported |
| | RSRP # 1 for cell # 1, if reported |
| | Differential RSRP # 2 for cell # 1, if reported |
| | ... |
| | Differential RSRP # J for cell # 1, if reported |
| | ... |
| | RSRP # 1 for cell # L, if reported |
| | Differential RSRP # 2 for cell # L, if reported |
| | ... |
| | Differential RSRP # J for cell # L, if reported |

B) In some implementations, a granularity of reporting the F prediction instance(s) is F prediction instance(s).

Here, in order to save the number of times of reporting, the terminal may report F prediction instance(s) to the network device in one report.

In some implementations, the reporting has a second format, and the second format includes F group(s) of information, and the F group(s) of information has(ve) a correspondence relationship with F prediction instance(s). Each group of information in the F group(s) of information includes: a prediction time instance index, L cell index(es), X1 downlink reference signal resource indexes, and X1 link qualities. Alternatively, each group of information in the F group(s) of information includes: L cell index(es), X1 downlink reference signal resource indexes, and X1 link qualities. The L cell index(es) are(is) the index(es) of top L cell(s) among the P cell(s); the X1 downlink reference signal resource indexes include index(es) of top J downlink reference signal resource(s) in each of the L cell(s); and the X1 link qualities have a correspondence relationship with the X1 downlink reference signal resource indexes.

Here, the cell index may be a PCI, a PCI index, a configuration index of a candidate cell, or an index of Set A (i.e., p-index).

Here, the downlink reference signal resource index may also be replaced with a beam (pair) index, a downlink reference signal index or a spatial filter index.

Here, the X1 link qualities may be reported in a differential manner or may be reported in a non-differential manner. In the case of reporting in a differential manner, the X1 link qualities are represented by a reference link quality and X1-1 difference values, and for example, the reference link quality may be the best link quality among the X1 link qualities, the difference value and the reference link quality may determine a link quality, and the X1-1 difference value and the reference link quality may determine the X1-1 link qualities. Further, the reporting format may further include a downlink reference signal resource index corresponding to the reference link quality. In the case of non-differential reporting, the X1 link qualities are directly expressed by X1 link qualities.

As an example, the reporting format for the prediction instance is given below. A downlink reference signal resource index (CRI or SSBR) or a beam (pair) index may be replaced with a downlink reference signal index or a spatial filter index.

**In** Table 2 below, the reporting format for the prediction instance(s) corresponding to F prediction time instance(s) is given, and the link quality is reported in a differential manner. The prediction instance(s) corresponding to the F prediction time instance(s) may be reported with or without prediction time instance index(es), and the understanding of the network device for the prediction result(s) is not affected. In Table 2, the reporting format includes F group(s) of information, and each group of information represents one prediction instance. For each prediction instance, its contents may include [prediction time instance index] (i.e., f-value) or may not include [prediction time instance index]. The contents of each prediction instance are similar to those in Table 1 above.

**Table 2: Reporting of Mobility Prediction at F Prediction Time Instances**

| CSI Report Number | CSI Fields |
|---|---|
| CSI Report # n | [Prediction instance # 1, if reported] |
| | PCI/PCI index/Candidate Cell Configuration index/Set A index # 1, if reported |
| | PCI/PCI index/Candidate Cell Configuration index/Set A index # 2, if reported |
| | ... |
| | PCI/PCI index/Candidate Cell Configuration index/Set A index # L, if reported |
| | CRI/SSBRI/beam (pair) index # 1 for cell # 1, if reported |
| | CRI/SSBRI/beam (pair) index # 2 for cell # 1, if reported |
| | ... |
| | CRI/SSBRI/beam (pair) index # J for cell # 1, if reported |
| | ... |
| | CRI/SSBRI/beam (pair) index # 1 for cell # L, if reported |
| | CRI/SSBRI/beam (pair) index # 2 for cell # L, if reported |
| | ... |
| | CRI/SSBRI/beam (pair) index # J for cell # L, if reported |
| | RSRP # 1 for cell # 1, if reported |
| | Differential RSRP # 2 for cell # 1, if reported |
| | ... |
| | Differential RSRP # J for cell # 1, if reported |
| | ... |
| | RSRP # 1 for cell # L, if reported |
| | Differential RSRP # 2 for cell # L, if reported |
| | ... |
| | Differential RSRP # J for cell # L, if reported |
| | ... |
| | [Prediction Instance #F, if reported] |
| | PCI/PCI index/Candidate Cell Configuration index/Set A index # 1, if reported |
| | PCI/PCI index/Candidate Cell Configuration index/Set A index # 2, if reported |
| | ... |
| | PCI/PCI index/Candidate Cell Configuration index/Set A index # L, if reported |
| | CRI/SSBRI/beam (pair) index # 1 for cell # 1, if reported |
| | CRI/SSBRI/beam (pair) index # 2 for cell # 1, if reported |
| | ... |
| | CRI/SSBRI/beam (pair) index # J for cell # 1, if reported |
| | ... |
| | CRI/SSBRI/beam (pair) index # 1 for cell # L, if reported |
| | CRI/SSBRI/beam (pair) index # 2 for cell # L, if reported |
| | ... |
| | CRI/SSBRI/beam (pair) index # J for cell # L, if reported |
| | RSRP # 1 for cell # 1, if reported |
| | Differential RSRP # 2 for cell # 1, if reported |
| | ... |
| | Differential RSRP # J for cell # 1, if reported |
| | ... |
| | RSRP # 1 for cell # L, if reported |
| | Differential RSRP # 2 for cell # L, if reported |
| | ... |
| | Differential RSRP # J for cell # L, if reported |

### The model is on the network device side

**In** some implementations, the first model in the above scheme is on the network device side. Here, after the terminal obtains the K measurement instance(s), the terminal transmits the K measurement instance(s) to the network device, and the network device receiving the K measurement instance(s) from the terminal. The network device obtains F prediction instance(s) based on prediction through the local first model.

**In** some implementations, the reporting method for the K measurement instance(s) include(s) at least one of: periodic reporting, semi-persistent reporting, and aperiodic reporting.

### 1) Periodic/semi-persistent reporting

In some implementations, for periodic reporting or semi-persistent reporting, before the terminal transmits K measurement instance(s) to the network device, the network device transmits fourth configuration information to the terminal, and the terminal receives the fourth configuration information from the network device, the fourth configuration information being used to configure a reporting period and a reporting offset corresponding to the periodic reporting or semi-persistent reporting.

In some implementations, the fourth configuration information may be carried in RRC signaling.

Here, the terminal periodically or semi-persistently reports the number K of measurement time instance(s) and the measurement instance(s) corresponding to K measurement time instance(s) according to the reporting period and reporting offset configured by the network device. For periodic reporting, once the terminal obtains the measurement configuration (such as the first configuration information and/or the second configuration information) and the reporting configuration (such as the fourth configuration information) from the network device, the terminal may periodically report the measurement instance(s). For semi-persistent reporting, after obtaining the measurement configuration and the reporting configuration, the terminal needs to obtain an instruction to activate the configuration, and after obtaining the instruction to activate the configuration, the terminal may periodically report the measurement instance(s).

### 2) Aperiodic reporting

In some implementations, for aperiodic reporting, before the terminal sends K measurement instance(s) to the network device, the network device may send third DCI to the terminal, and the terminal receives the third DCI from the network device, the third DCI being used to trigger the aperiodic reporting.

Here, for aperiodic reporting, after obtaining the measurement configuration (such as the first configuration information and/or the second configuration information) and the reporting configuration (such as the fourth configuration information), the terminal further needs to obtain an instruction to trigger measurement and reporting, and the network device may trigger the terminal to perform measurement and reporting through DCI (that is, a trigger instruction), and after obtaining the trigger instruction, the terminal may perform measurement and reporting of the K measurement instance(s).

In the embodiments of the present disclosure, for the measurement result(s) of the first model (i.e., the K measurement instance(s)), each measurement instance includes a link quality measured from the whole Set B_{n, k}/Set C_{n, k} (1 ≤ n ≤ N, 1 ≤ k ≤ K), and the terminal reports the measurement result(s) to the network device by one or more reports. For the link quality, L1-RSRP is taken as an example in some examples, and other link quality indicators such as L1-SINR, L1-RSSI, L1-RSRQ, or CQI are not excluded.

In order to carry the temporal domain measurement reporting of mobility, the technical solutions of the embodiments of the present disclosure propose the following reporting formats.
I) In some implementations, a granularity of reporting the K measurement instance(s) is one measurement instance.

Here, for K measurement instance(s), the network device may configure the terminal to report after each measurement, and this reporting method makes the load of each reporting smaller, but needs to report K times.

In some implementations, the reporting has a third format, the third format including: a measurement time instance index and X2 link qualities. The X2 link qualities include the link quality(ies) of M downlink reference signal(s) for each of N cell(s), and M is a positive integer. Here, the reported content does not include N cell index(es).

In some implementations, the reporting has a fourth format, the fourth format including: measurement time instance indexes, N cell index(es), and X2 link qualities. The X2 link qualities include the link quality(ies) of M downlink reference signal(s) for each of N cell(s), and M is a positive integer. Here, the reported content includes N cell index(es).

The format in reporting the above X2 link qualities adopts a differential reporting format or a non-differential reporting format.

As an implementation, in the non-differential reporting format, X2 link qualities are represented by X2 link qualities, as shown in Table 3 below.

As another implementation, in the differential reporting format, the X2 link qualities are divided into N set(s) of link qualities, each set of link qualities being represented by a reference link quality and M-1 difference values, as shown in Tables 5 and 9 below. Exemplarily, the reference link quality may be the best one of the M link quality(ies), a difference value and a reference link quality may determine a link quality, and M-1 difference values and a reference link quality may determine M-1 link qualities. Further, the reporting format may further include a downlink reference signal resource index corresponding to the reference link quality.

As another implementation, in the differential reporting format, the X2 link qualities are represented by a reference link quality and X2-1 difference values, as shown in Table 7 below. Exemplarily, the reference link quality may be the best one of the X2 link qualities, a difference value and a reference link quality may determine a link quality, and X2-1 difference values and a reference link quality may determine X2-1 link qualities. Further, the reporting format may further include a downlink reference signal resource index corresponding to the reference link quality.

**II) In** some implementations, a granularity of reporting K measurement instance(s) is K measurement instance(s).

Here, the network device may configure the terminal to report K measurement instance(s) after K measurement(s), and this reporting method makes the load of one reporting relatively large, but only one reporting is required.

**In** some implementations, the reporting has a fifth format, and the fifth format includes: K group(s) of information, the K group(s) of information having a correspondence relationship with K measurement instance(s). Each of the K group(s) of information includes: X2 link qualities, the X2 link qualities including the link quality(ies) of M downlink reference signal(s) for each of N cell(s), and M being a positive integer. Here, the reported content does not include N cell index(es).

**In** some implementations, the reporting has a sixth format. The sixth format includes: N cell index(es) and K group(s) of information; or the sixth format includes: N cell index(es), K measurement instance index(es), and K group(s) of information. K group(s) of information has(ve) a correspondence relationship with K measurement instance index(es). Each of the K group(s) of information includes: X2 link qualities. The X2 link qualities include the link quality(ies) of M downlink reference signal(s) for each of N cell(s), and M is a positive integer. Here, the reported content includes N cell index(es) and/or K measurement instance index(es).

The format for reporting the above X2 link qualities is a differential reporting format or a non-differential reporting format.

As an implementation, in the non-differential reporting format, X2 link qualities are represented by X2 link qualities, as shown in Table 4 below.

As another implementation, in the differential reporting format, K × X2 link qualities are divided into K × N set(s) of link qualities, each set of link qualities being represented by a reference link quality and M - 1 difference values, as shown in Tables 6 and 10 below. Exemplarily, the reference link quality may be the best one of M link quality(ies); a difference value and a reference link quality may determine a link quality; and M - 1 difference values and a reference link quality may determine M - 1 link qualities. Further, the reporting format may further include a downlink reference signal resource index corresponding to the reference link quality.

As another implementation, in the differential reporting format, the K × X2 link qualities are represented by a reference link quality and K × X2-1 difference values, as shown in Table 8 below. Exemplarily, the reference link quality may be the best link quality among the K × X2 link qualities; a difference value and a reference link quality may determine a link quality; and the K × X2-1 difference values and a reference link quality may determine K × X2-1 link qualities. Further, the reporting format may further include a downlink reference signal resource index corresponding to the reference link quality.

III) In some implementations, a granularity of reporting the K measurement instance(s) is the measurement result of a cell in a measurement instance.

In some implementations, the reporting has a sixth format, the sixth format including: a measurement time instance index, a cell index, and M link quality(ies). The M link quality(ies) include(s) link quality(ies) of M downlink reference signal(s) of the cell corresponding to the cell index, and M is a positive integer.

The format of the M link quality(ies) in reporting is a differential reporting format or a non-differential reporting format.

As an implementation, in the non-differential reporting format, M link quality(ies) is (are) represented by M link quality(ies).

As another implementation, in the differential reporting format, the M link quality(ies) is (are) represented by a reference link quality and M - 1 difference values, as shown in Table 11 below. Exemplarily, the reference link quality may be the best one of the M link quality(ies); a difference value and a reference link quality may determine a link quality; and the M - 1 difference values and a reference link quality may determine the M - 1 link qualities. Further, the reporting format may further include a downlink reference signal resource index corresponding to the reference link quality.

As an example, the format for reporting the measurement instance is given below. A downlink reference signal resource index (CRI or SSBR) or a beam (pair) index may be replaced with a downlink reference signal index or a spatial filter index.

In Table 3 below, the reporting format of the measurement instance corresponding to the k-th measurement time is given, and the link quality is reported in a non-differential manner. In Table 3, the reporting format includes measurement time instance indexes (i.e., k value) and N × M link quality(ies). In the k-th measurement instance, since the link qualities may be reported according to corresponding downlink reference signal resource indexes (i.e., SSBRIs or CRIs or beam (pair) indexes) from small to large, the downlink reference signal resource indexes may be omitted, and further, the downlink reference signal resource indexes may be reported from small to large according to the n index (i.e., cell index) first, and then reported from small to large according to the k index (i.e., measurement time instance index).

**Table 3: Reporting of measurement results for k-th measurement instance (with no L1-RSRP difference)**

| CSI REPORT NUMBER | CSI Fields |
|---|---|
| CSI Report # n | Measurement instance # k |
| | RSRP # 1 (of PCI/PCI index/Candidate Cell Configuration index/n index # 1) |
| | RSRP # 2 (of PCI/PCI index/candidate cell configuration index/ n index # 1) |
| | ... |
| | RSRP # M (of PCI/PCI index/Candidate Cell Configuration index/n index # 1) |
| | ... |
| | RSRP # 1 (of PCI/PCI index/candidate cell configuration index/n index # N) |
| | RSRP # 2 (of PCI/PCI index/Candidate Cell Configuration index/n index # N) |
| | ... |
| | RSRP # M (of PCI/PCI index/Candidate cell configuration index/n index # N) |

**In** Table 4 below, the reporting format of measurement instance(s) corresponding to K measurement time instance(s) (that is, all K measurement instance(s)) is given, and the link quality is reported in a non-differential manner. In Table 4, each measurement instance needs to include the link quality(ies) of N cell(s), and the link quality of each cell includes the link quality(ies) of M downlink reference signal(s), so the terminal needs to report K × N × M link qualities in total. In Table 4, a measurement time instance index may not be included. In this case, the measurement instances corresponding to each measurement time instance need to be arranged in sequence in the reporting format. Alternatively, measurement time instance indexes may be included, and in this case, measurement instances corresponding to each measurement time instance may be flexibly arranged in the reporting format.

**Table 4: Measurement results reported for all K measurement instance(s) (with no L1-RSRP difference)**

| CSI REPORT NUMBER | CSI Fields |
|---|---|
| CSI Report # n | RSRP # 1 (of PCI/PCI index/candidate cell configuration index/n index # 1 at measurement instance # 1) |
| | RSRP # 2 (of PCI/PCI index/candidate cell configuration index/n index # 1 at measurement instance # 1) |
| | ... |
| | RSRP # M (of PCI/PCI index/candidate cell configuration index/n index # 1 at measurement instance # 1) |
| | ... |
| | RSRP #1(of PCI/PCI index/candidate cell configuration index/n index # N at Measurement instance # 1) |
| | RSRP #2(of PCI/PCI index/candidate cell configuration index/n index # N at Measurement instance # 1) |
| | ... |
| | RSRP #M(of PCI/PCI index/candidate cell configuration index/n index # N at Measurement instance # 1) |
| | ... |
| | RSRP #1(of PCI/PCI index/Candidate Cell Configuration index/n index # 1 at Measurement instance # K) |
| | RSRP #2(of PCI/PCI index/Candidate Cell Configuration index/n index # 1 at Measurement instance # K) |
| | ... |
| | RSRP #M(of PCI/PCI index/Candidate Cell Configuration index/n index # 1 at Measurement instance # K) |
| | ... |
| | RSRP #1(of PCI/PCI index/Candidate Cell Configuration index/n index # N at Measurement instance # K) |
| | RSRP #2(of PCI/PCI index/Candidate Cell Configuration index/n index # N at Measurement instance # K) |
| | ... |
| | RSRP #M(of PCI/PCI index/Candidate Cell Configuration index/n index # N at Measurement instance # K) |

**In** Table 5 below, the reporting format of the measurement instance corresponding to the k-th measurement time instance is given, and the link quality is reported in a differential manner. The difference between Table 5 and Table 3 is that the link quality is reported in a differential manner. For M link quality(ies) of each cell, the highest link quality among the M link quality(ies) is used as a reference link quality, and a downlink reference signal resource index (such as a SSBRI or a CRI) corresponding to the reference link quality is marked. Other link qualities are reported differentially according to a fixed order (such as small to large) of the downlink reference signal resource indexes. The differential reporting here means merely reporting difference values between other link qualities and the reference link quality.

**Table 5: Report of measurement results for k-th measurement instance (with L1-RSRP difference)**

| CSI REPORT NUMBER | CSI Fields |
|---|---|
| | Measurement instance # k |
| | SSBRI/CRI (of PCI/PCI index/candidate cell configuration index/n index # 1) |
| | RSRP # 1 (of PCI/PCI index/Candidate Cell Configuration index/n index # 1) |
| | Differential RSRP # 2 (of PCI/PCI index/candidate cell configuration index/n index # 1) |
| | ... |
| CSI Report # n | Differential RSRP # M (of PCI/PCI index/Candidate Cell Configuration index/n index # 1) |
| | ... |
| | SSBRI/CRI (of PCI/PCI index/Candidate Cell Configuration index/n index # N) |
| | RSRP # 1 (of PCI/PCI index/candidate cell configuration index/n index # N) |
| | Differential RSRP # 2 (of PCI/PCI index/candidate cell configuration index/n index # N) |
| | ... |
| | Differential RSRP # M (of PCI/PCI index/candidate cell configuration index/n index # N) |

**In** Table 6 below, the reporting format of measurement instance(s) corresponding to K measurement time instance(s) (that is, all K measurement instance(s)) is given, and the link quality is reported in a differential manner. The difference between Table 6 and Table 5 is that Table 6 contains the contents of K measurement instance(s), and the contents of each measurement instance are similar to those in Table 5. In addition, a measurement time instance index may not be included in Table 6, and in this case, the measurement instances corresponding to each measurement time instance need to be sequentially arranged in the reporting format. Alternatively, measurement time instance indexes may be included, and in this case, measurement instances corresponding to each measurement time instance may be flexibly arranged in the reporting format.

**Table 6: Report of measurement results for all K measurement instance(s) (with L1-RSRP difference)**

| CSI REPORT NUMBER | CSI Fields |
|---|---|
| CSI Report # n | SSBRI/CRI(of PCI/PCI index/Candidate Cell Configuration index/n index # 1 at Measurement instance # 1) |
| | RSRP # 1 (of PCI/PCI index/candidate cell configuration index/n index # 1 at measurement instance # 1) |
| | Differential RSRP # 2 (of PCI/PCI index/candidate cell configuration index/n index # 1 at measurement instance # 1) |
| | ... |
| | Differential RSRP # M (of PCI/PCI index/candidate cell configuration index/n index # 1 at measurement instance # 1) |
| | ... |
| | SSBRI or CRI(of PCI/PCI index/candidate cell configuration index/n index # N at Measurement instance # 1) |
| | RSRP #1(of PCI/PCI index/candidate cell configuration index/n index # N at Measurement instance # 1) |
| | Differential RSRP # 2 (of PCI/PCI index/candidate cell configuration index/n index # N at measurement instance # 1) |
| | ... |
| | Differential RSRP # M (of PCI/PCI index/candidate cell configuration index/n index # N at measurement instance # 1) |
| | ... |
| | SSBRI/CRI(of PCI/PCI index/Candidate Cell Configuration index/n index # 1 at Measurement instance # K) |
| | RSRP #1(of PCI/PCI index/Candidate Cell Configuration index/n index # 1 at Measurement instance # K) |
| | Differential RSRP # 2 (of PCI/PCI index/candidate cell configuration index/n index # 1 at measurement instance # K) |
| | ... |
| | Differential RSRP # M (of PCI/PCI index/candidate cell configuration index/n index # 1 at measurement instance # K) |
| | ... |
| | SSBRI or CRI(of PCI/PCI index/Candidate Cell Configuration index/n index # N at Measurement instance # K) |
| | RSRP #1(of PCI/PCI index/Candidate Cell Configuration index/n index # N at Measurement instance # K) |
| | Differential RSRP # 2 (of PCI/PCI index/candidate cell configuration index/n index # N in measurement instance # K) |
| | ... |
| | Differential RSRP # M (of PCI/PCI index/candidate cell configuration index/n index # N at measurement instance # K) |

**In** Table 7 below, the reporting format of the measurement instance corresponding to the k-th measurement time instance is given, and the link qualities are reported in a differential manner. The difference between Table 7 and Table 5 is that the highest link quality is selected from the link qualities of all cells as the reference link quality, and the downlink reference signal resource index (such as a SSBRI or a CRI) corresponding to the reference link quality is marked. In addition, the cell index corresponding to the reference link quality needs to be marked, and other link qualities are differentially reported according to a fixed order (such as from small to large) of the downlink reference signal resource indexes.

**Table 7: Report of measurement results for k-th measurement instance (with L1-RSRP difference)**

| CSI REPORT NUMBER | CSI Fields |
|---|---|
| CSI Report # n | PCI/PCI index/candidate cell configuration index/n index # Y (with highest L1-RSRP among all L1-RSRPs) |
| | SSBRI/CRI(of PCI/PCI index/candidate cell configuration index/n index # Y with Highest L1-RSRP) |
| | RSRP #1(of PCI/PCI index/candidate cell configuration index/n index # Y) |
| | Differential RSRP # 2 (of PCI/PCI index/candidate cell configuration index/n index # 1) |
| | ... |
| | Differential RSRP # M (of PCI/PCI index/Candidate Cell Configuration index/n index # 1) |
| | ... |
| | Differential RSRP # 1 (of PCI/PCI index/candidate cell configuration index/n index # N) |
| | Differential RSRP # 2 (of PCI/PCI index/candidate cell configuration index/n index # N) |
| | ... |
| | Differential RSRP # M (of PCI/PCI index/candidate cell configuration index/n index # N) |

**In** Table 8 below, the reporting format of measurement instance(s) corresponding to K measurement time instance(s) (that is, all K measurement instance(s)) is given, and the link qualities are reported in a differential manner. The difference between Table 8 and Table 7 is that Table 8 contains the contents of K measurement instance(s), and the contents of each measurement instance are similar to those in Table 7. Further, in Table 8, it is necessary to include a measurement time instance index (i.e., k value) corresponding to the reference link quality.

**Table 8: Reportign of measurement results for all K measurement instance(s) (with L1-RSRP difference)**

| CSI REPORT NUMBER | CSI Fields |
|---|---|
| | PCI/PCI index/candidate cell configuration index/n index # Y (with the highest L1-RSRP among all L1-RSRPs) at measurement instance H |
| | SSBRI/CRI (of PCI/PCI index/candidate cell configuration index/n index # Y at measurement instance H with highest L1-RSRP) |
| | RSRP # 1 (of PCI/PCI index/candidate cell configuration index/n index # Y at measurement instance H) |
| | Differential RSRP # 2 (of PCI/PCI index/candidate cell configuration index/n index # 1 at measurement instance # 1) |
| CSI Report # n | ... |
| | Differential RSRP # M (of PCI/PCI index/candidate cell configuration index/n index # 1 at measurement instance # 1) |
| | ... |
| | Differential RSRP # M (of PCI/PCI index/candidate cell configuration index/n index # N at measurement instance # K) |
| | Differential RSRP # 2 (of PCI/PCI index/candidate cell configuration index/n index # N at measurement instance # K) |
| | ... |
| | Differential RSRP # M (of PCI/PCI index/candidate cell configuration index/n index # N at measurement instance # K) |

In Table 9 below, the reporting format of the measurement instance corresponding to the k-th measurement time instance is given, and the link qualities are reported in a differential manner. The difference between Table 9 and Table 5 is that Table 9 contains N cell index(es), and the content of link quality is similar to that in Table 5. Table 9 does not contain a measurement time instance index, but of course, Table 9 can contain a measurement time instance index. Based on the reporting format shown in Table 9, the terminal can flexibly report part or all of the measurement results, specifically, the terminal can report indexes of part of cells and a link quality corresponding to each cell in the part of cells.

**Table 9: Report of measurement results for k-th measurement instance (with L1-RSRP difference)**

| CSI REPORT NUMBER | CSI Fields |
|---|---|
| | PCI/PCI index/candidate cell configuration index/n index # 1, if reported |
| | PCI/PCI index/candidate cell configuration index/n index # 2, if reported |
| | ... |
| | PCI/PCI index/Candidate Cell Configuration index/n index # N, if reported |
| | SSBRI/CRI (of PCI/PCI index/candidate cell configuration index/n index # 1) |
| | RSRP # 1 (of PCI/PCI index/Candidate Cell Configuration index/n index # 1) |
| | Differential RSRP # 2 (of PCI/PCI index/candidate cell configuration index/n index # 1) |
| CSI Report # n | ... |
| | Differential RSRP # M (of PCI/PCI index/Candidate Cell Configuration index/n index # 1) |
| | ... |
| | SSBRI/CRI (of PCI/PCI index/Candidate Cell Configuration index/n index # N) |
| | RSRP # 1 (of PCI/PCI index/candidate cell configuration index/n index # N) |
| | Differential RSRP # 2 (of PCI/PCI index/candidate cell configuration index/n index # N) |
| | ... |
| | Differential RSRP # M (of PCI/PCI index/candidate cell configuration index/n index # N) |

In Table 10 below, the reporting format of measurement instance(s) (that is, all K measurement instance(s)) corresponding to K measurement time instance(s) is given, and the link qualities are reported in a differential manner. The difference between Table 10 and Table 9 is that Table 10 contains K measurement instance(s), and the content of each measurement instance is similar to that in Table 9. In addition, Table 10 also includes measurement time instance indexes, and in this case, the measurement instances corresponding to the measurement time instances can be flexibly arranged in the reporting format. Of course, Table 10 may not include a measurement time instance index, and in this case, the measurement instances corresponding to the measurement time instances are sequentially arranged in the report format.

**Table 10: Report of measurement results for all K measurement instance(s) (with L1-RSRP difference)**

| CSI REPORT NUMBER | CSI Fields |
|---|---|
| | PCI/PCI index/candidate cell configuration index/n index # 1, if reported |
| | PCI/PCI index/candidate cell configuration index/n index # 2, if reported |
| | ... |
| | PCI/PCI index/Candidate Cell Configuration index/n index # N, if reported |
| | Measurement instance index # 1, if reported |
| | Measurement instance index # 2, if escalated |
| | ... |
| | Measurement instance index # K, if reported |
| | SSBRI/CRI(of PCI/PCI index/Candidate Cell Configuration index/n index # 1 at Measurement instance # 1) |
| | RSRP # 1 (of PCI/PCI index/candidate cell configuration index/n index # 1 at measurement instance # 1) |
| CSI Report # n | Differential RSRP #( of PCI/PCI index/Candidate Cell Configuration index/n index # 1 at Measurement instance # 1) |
| | ... |
| | Differential RSRP # M (of PCI/PCI index/candidate cell configuration index/n index # 1 at measurement instance # 1) |
| | ... |
| | SSBRI/CRI(of PCI/PCI index/Candidate Cell Configuration index/n index # N at Measurement instance # K) |
| | RSRP #1(of PCI/PCI index/Candidate Cell Configuration index/n index # N at Measurement instance # K) |
| | Differential RSRP # 2 (of PCI/PCI index/candidate cell configuration index/n index # N at measurement instance # K) |
| | ... |
| | Differential RSRP # M (of PCI/PCI index/candidate cell configuration index/n index # N at measurement instance # K) |

In Table 11 below, the reporting format of the measurement result of a cell in a measurement instance corresponding to a measurement time instance is shown, and the link qualities are reported in a differential manner. The reporting format includes a cell index, a measurement time instance index and a corresponding link quality. M link quality(ies) is (are) reported in a differential manner. Using the reporting format shown in Table 11, the terminal may report only one measurement result of the first downlink reference signal subset in each reporting, and the network device needs to collect multiple reports from the terminal as the input of the first model. Of course, considering the flexibility of the use of model on the network device side, the network device does not necessarily need to wait to make predictions until the measurement results for all the first downlink reference signal subsets are collected.

**Table 11: Reporting of measurement results for a single downlink reference signal subset**

| CSI REPORT NUMBER | CSI Fields |
|---|---|
| | PCI/PCI index/Candidate Cell Configuration index/n index at Measurement Instance k |
| CSI Report # n | SSBRI/CRI, if reported |
| | RSRP #1, if reported |
| | Differential RSRP #2, if reported |
| | ... |
| | Differential RSRP #M, if reported |

**In** some implementations, after the network device obtains F prediction instance(s), the network device may transmit a Cell Switch Command (CSC) to the terminal, and the terminal may receive the CSC from the network device, the CSC being used to instruct the terminal to switch to a target cell, and the target cell being determined based on part or all of the F prediction instance(s).

Here, the F prediction instance(s) obtained by the network device may be the F prediction instance(s) transmitted by the terminal to the network device in the above scheme (refer to the scheme in which the above model is on the terminal side), or may be the F prediction instance(s) predicted by the network device based on the obtained K measurement instance(s) (refer to the scheme in which the above model is on the network device side).

Exemplarily, the network device may use a unified TCI state based cell switch command which is carried by an MAC CE. The unified TCI state may be a downlink/joint TCI state (DL/joint TCI state), and includes a cell index (e.g., a PCI, a PCI index, a configuration index of cell, etc.). The target cell to which the terminal is to be switched can be indicated based on the cell index.

**In** some implementations, after the terminal obtains the K measurement instance(s) and predicts the F prediction instance(s), the terminal may send a Cell Switch reQuest (CSQ) to the network device. The Cell Switch request carries a target prediction instance, and the target prediction instance is determined based on the F prediction instance(s).

Here, after obtaining the K measurement instance(s) and predicting the F prediction instance(s), the terminal may not report the F prediction instance(s), but may send a cell switch request to the network device according to the F prediction instance(s). The cell switch request is carried by an MAC CE. Exemplarily, the cell switch request may contain at least one of the following information: a prediction time instance index (i.e., f-value); a cell index of the target cell, such as a PCI, a PCI index, a candidate cell configuration index, or p-index; a downlink reference signal resource index corresponding to the target cell, such as a CRI/SSBRI or a beam (pair) index; or, a link quality corresponding to the downlink reference signal resource index, such as L1-RSRP. After receiving the cell switch request, the network device only needs to send an acknowledgement command to the terminal, and the terminal can complete the subsequent handover operation.

It should be noted that, for beam-level mobility, the best beam predicted by the model is evaluated according to the link quality corresponding to the beam, that is, the highest L1-RSRP. For cell-level mobility, for example, a cell which has a single best beam (but has other beams with low quality) cannot guarantee that the cell is a best cell for a UE, and a common method of selecting a best cell is to perform a weighted average of the link qualities of multiple beams in the cell, so as to obtain the best cell (ranked from high to low by average L1-RSRPs). In the technical solutions of the embodiments of the present disclosure, the model used to predict the best cell also refers to the selection mechanism of the best cell, that is, cell-level mobility.

According to the technical scheme of the embodiments of the present disclosure, a model-based mobility prediction technique is proposed, which takes measurement results of multiple cells at multiple historical measurement time instances as input to the model, and predicts (outputs) a best cell at multiple prediction time instance(s) in the future; and/or a best beam (pair) under the cell; and/or a link quality corresponding to the beam (pair), thereby realizing mobility management from reactive to active, and reducing the overhead and latency of downlink mobility measurement.

Hereinafter, the technology of the embodiments of the present disclosure will be described with reference to specific application examples, in which a terminal is referred to as a UE, and a network device is referred to as an NW.

It is to be noted that the input set of the model may be a measurement set Set B or may be generated from a measurement set Set C. In other words, Set B itself may be a measurement set, or Set B may also be generated from the measurement set Set C, i.e. Set B corresponds to multiple best beams (pairs) measured in Set C and the link qualities thereof. In the following application example, Set B may be a measurement set or may be generated from the measurement set Set C.

### Application Example 1

In the present example, a model is deployed on a UE side, so that the UE can use a measurement result of a downlink reference signal as the input of the model and make a inference.

FIG. 16 is a schematic flow diagram of a temporal domain mobility prediction method, and as shown in FIG. 16, the method includes the following steps.

Step 1601 is that: the UE reports capability information of the UE to the NW.

Here, the capability information of the UE may refer to the above-described related scheme.

Step 1602 is that: the NW configures Set A and Set B for the UE.

Here, the NW may refer to the aforementioned related scheme for configuring Set A and Set B for the UE.

Step 1603 is that: the UE performs measurement according to the configuration of the NW to obtain K measurement instance(s).

Here, the contents of the K measurement instance(s) can be referred to the aforementioned related descriptions. In FIG. 16, the k-th (1 ≤ k ≤ K) measurement instance among the K measurement instance(s) is referred to as measurement instance # k. The measurement instance # k includes measurement results corresponding to Set B_{_1, k}, Set B_{_2, k},..., and Set B_{_N, k}, respectively. Here, Set B_ _{N, k} (1 ≤ n ≤ N, 1 ≤ k ≤ K) represents the same meaning as Set B_{n, k} in the above scheme.

Step 1604 is that: based on the measurement instance, the UE-side model predicts: top L (L ≥ 1) cell indexe(s), top J (J ≥ 1) beam (pair) index(es) for each top cell, and a link quality corresponding to each top beam (pair) index.

Here, the UE-side model performs prediction corresponding to F prediction time instance(s). Specifically, the UE-side model requires K historical measurement instances as input to predict subsequent measurement instances at F prediction time instance(s).

Step 1605 is that: the UE reports a prediction instance or a cell switch request to the NW.

Here, the prediction instance or the cell switch request may refer to the aforementioned related scheme. In FIG. 16, the f-th (1 ≤ f ≤ F) prediction instance among the F prediction instance(s) is called prediction instance # f. The prediction instance # f includes prediction results corresponding to Set A_{_l, f}, Set A_{_2, f},..., Set A_{_P, f}, respectively. Here, Set A_{_P, f} (1 ≤ p ≤ P, 1 ≤ f ≤ F) represents the same meaning as Set A_{p, f} in the above scheme.

Step 1606 is taht: the NW transmits a cell switch command or an acknowledgement command to the UE.

Here, the cell switch command or the acknowledgement command may refer to the aforementioned related scheme.

Note that, in FIG. 16, step 1606 is indicated by a dashed line because the top cell predicted by the model may be the current serving cell, and thus cell handover is not required, so step 1606 is an optional step.

Note that, in FIG. 16, the ellipse represents the measurement set Set B_{n, k}, where n (1 ≤ n ≤ N) represents an index of the first downlink reference signal subset (i.e., the measurement subset), and k (1 ≤ k ≤ K) represents a measurement time instance index. The dashed ellipse represents a downlink reference signal not measured by the UE but included in the prediction set Set A_{p, f}, where p (1 ≤ p ≤ P) represents an index of the second downlink reference signal subset (i.e. a prediction subset) and f (1 ≤ f ≤ F) represents a prediction time instance index.

It should be noted that the number P of prediction subsets is not necessarily equal to the number N of measurement subsets. For example, in the case of P = 16 and N = 8, the UE only measures 8 measurement subsets, but can infer a top cell from 16 prediction subsets (such as prediction subsets of serving cell and 15 candidate cells), and/or a top beam (pair) index corresponding to the top cell, and/or a link quality corresponding to the top beam (pair) index. A typical deployment method is that P is equal to N, that is, the number of prediction subsets and the number of measurement subsets are the same, and each prediction subset/measurement subset corresponds to a cell.

It should be noted that, for a cell, Set B and Set A may be the same (i.e., there is only temporal domain prediction), or Set B and Set A may be different (i.e., there is spatial domain and temporal domain prediction).

It should be noted that, for beam-level mobility, a best beam predicted by the model is evaluated according to the link quality corresponding to the beam, that is, the highest L1-RSRP. For cell-level mobility, for example, a cell which has a single best beam but has other beams with low quality cannot guarantee that the cell is a top cell for the UE. A common method of selecting a top cell is to perform a weighted average of the link qualities of multiple beams in the cell, so as to obtain the top cell (ranked from high to low by average L1-RSRP). In the technical solutions of the embodimenst of the present disclosure, the model used to predict a top cell also refers to the selection mechanism of a top cell, that is, cell-level mobility.

### Application Example 2

In this application example, the model is deployed on the NW side, and the UE performs temporal domain mobility measurement, that is, measuring Set B, and reporting the measurement result to the NW. As such, the model deployed on the NW side can perform temporal domain mobility prediction.

FIG. 17 shows a schematic flow diagram of a temporal domain mobility prediction method, as shown in FIG. 17, the method including the following steps.

In Step 1701, UE reports capability information of the UE to a NW.

Here, the capability information of the UE may refer to the aforementioned related scheme.

In Step 1702,the NW configures Set A and Set B for the UE.

Here, the NW may refer to the aforementioned related scheme for configuring Set A and Set B for the UE.

In Step 1703, the UE performs measurement according to the configuration of the NW to obtain K measurement instance(s).

Here, the contents of the K measurement instance(s) may refer to the aforementioned related descriptions. In FIG. 17, the k-th (1 ≤ k ≤ K) measurement instance among the K measurement instance(s) is called measurement instance # k. The measurement instance # k includes measurement results corresponding to Set B _ 1, k, Set B_{_2, k},..., and Set B_{_N, k}, respectively. Here, Set B_ _{n, k} (1 ≤ n ≤ N, 1 ≤ k ≤ k) represents the same meaning as Set B_{n, k} in the above scheme.

In Step 1704, the UE may report a measurement instance to the NW every time the measurement instance is obtained, or the UE may report K measurement instance(s) to the NW after obtaining the K measurement instance(s).

In Step 1705, the NW-side model predicts, according to the measurement instance, top L (L ≥ 1) cell index(es), top J (J ≥ 1) beam (pair) index(es) for each top cell, and a link quality corresponding to each top beam (pair) index.

Here, the foregoing related scheme may be referred to for the prediction instance. In FIG. 17, the f-th (1 ≤ f ≤ F) prediction instance among the F prediction instance(s) is called prediction instance # f. The prediction instance # f includes the prediction results corresponding to Set A_{_1, f}, Set A_{_2, f},..., Set A_{_P, f}, respectively. Here, Set A_{_P, f} (1 ≤ p ≤ P, 1 ≤ f ≤ F) represents the same meaning as Set A_{p, f} in the above scheme.

In Step 1706, the NW transmits a cell switch command to the UE.

Here, the cell switch command or the acknowledgement command may refer to the aforementioned related scheme.

In FIG. 17, step 1706 is indicated by a dashed line because the top cell predicted by the model may be the current serving cell, and thus cell handover is not required, so step 1706 is an optional step.

In FIG. 17, the ellipse represents the measurement set Set B_{n, k}, where n (1 ≤ n ≤ N) represents an index of the first downlink reference signal subset (i.e., the measurement subset), and k (1 ≤ k ≤ K) represents a measurement time instance index. The dashed ellipse represents a downlink reference signal not measured by the UE but included in the prediction set Set A_{p, f}, where p (1 ≤ p ≤ P) represents an index of the second downlink reference signal subset (i.e. the prediction subset) and f (1 ≤ f ≤ F) represents a prediction time instance index.

It should be noted that the number P of prediction subsets is not necessarily equal to the number N of measurement subsets. For example, in the case of P = 16 and N = 8, the UE only measures 8 measurement subsets, but the NW can infer a top cell from 16 prediction subsets (such as the prediction subsets of 1 serving cell and 15 candidate cells), and/or a top beam (pair) index corresponding to the top cell, and/or a link quality corresponding to the top beam (pair) index. A typical deployment method is that P is equal to N, that is, the number of prediction subsets and the number of measurement subsets are the same, and each prediction subset/measurement subset corresponds to a cell.

It should be noted that, for a cell, Set B and Set A may be the same (i.e., there is only temporal domain prediction), or Set B and Set A may be different (i.e., there is spatial domain and temporal domain prediction).

It should be noted that, for beam-level mobility, the best beam predicted by the model is evaluated according to the link quality corresponding to the beam, that is, the highest L1-RSRP. For cell-level mobility, for example, a cell which has a single best beam but has other beams with low quality cannot guarantee that the cell is a top cell for the UE. A common method of selecting a top cell is to perform a weighted average of link qualities of multiple beams in the cell, so as to obtain the top cell (ranked from high to low by average L1-RSRP). In the technical scheme of the embodiments of the present disclosure, the model used to predict a top cell also refers to the selection mechanism of a top cell, i.e. cell-level mobility.

The preferred embodiments of the present disclosure have been described in detail above with reference to the accompanying drawings, but the present disclosure is not limited to the specific details in the above-described embodiments. Within the scope of the technical concept of the present disclosure, a variety of simple modifications can be made to the technical solutions of the present disclosure, and these simple modifications all belong to the scope of protection of the present disclosure. For example, various specific technical features described in the above-described detailed description can be combined in any suitable manner without contradiction, and various possible combinations will not be described separately in this application in order to avoid unnecessary repetition. For example, various embodiments of the present disclosure may be combined arbitrarily, and as long as they do not violate the idea of the present disclosure, they shall also be regarded as the disclosure of the present disclosure. For another example, on the premise that there is no conflict, each embodiment described in the present disclosure and/or the technical features in each embodiment can be arbitrarily combined with the prior art, and the technical solution obtained after the combination should also fall within the scope of protection of the present disclosure.

It should also be understood that in various method embodiments of the present disclosure, the size of the sequence numbers of the above-described processes does not mean the sequence of implementation, and the sequence of implementation of each process should be determined by its function and internal logic, and should not constitute any limitation on the implementation of the embodiments of the present disclosure. In addition, in the embodiments of the present disclosure, the terms "downlink", "uplink", and "side link" are used to indicate the transmission direction of signals or data, wherein "downlink" is used to indicate that the transmission direction of signals or data is a first direction from a site to a UE of a cell, "uplink" is used to indicate that the transmission direction of signals or data is a second direction from the UE of the cell to the site, and "side link" is used to indicate that the transmission direction of signals or data is a third direction from UE 1 to UE 2. For example, "downlink signal" indicates that the transmission direction of the signal is the first direction. In addition, in the embodiments of the present disclosure, the term "and/or" represents only an association relationship describing association objects, and indicates that there may be three kinds of relationships. Specifically, A and/or B may represent three cases of A alone, A and B simultaneously, and B alone. In addition, the character "/" in this disclosure generally indicates that the related objects before and after are in an "or" relationship.

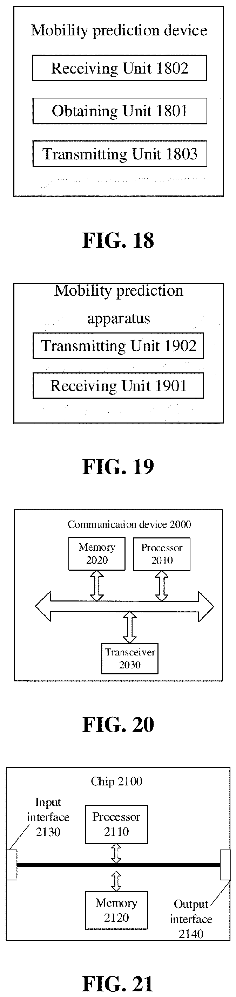

FIG. 18 is a schematic diagram of a structure and composition of a mobility prediction apparatus according to an embodiment of the present disclosure, and is applied to a terminal. As shown in FIG. 18, the apparatus includes following units.

An obtaining unit 1801 is configured to obtain K measurement instance(s) corresponding to a first downlink reference signal set, wherein the K measurement instance(s) is (are) obtained based on measurement performed by the terminal on downlink reference signals in the first downlink reference signal set at K measurement time instance(s), and the first downlink reference signal set includes first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s), K, N, F, and P being integers greater than or equal to 1.

In some implementations, the apparatus may further include: a receiving unit 1802 configured to receive first configuration information and/or second configuration information from a network device. The first configuration information is used to configure the first downlink reference signal set, and the second configuration information is used to configure the second downlink reference signal set.

In some implementations, the first configuration information is further used to configure first temporal domain information corresponding to the first downlink reference signal set, the first temporal domain information being used to determine K measurement time instance(s) corresponding to the K measurement instance(s); and/or the second configuration information is further used to configure second temporal domain information corresponding to the second downlink reference signal set, the second temporal domain information being used to determine F prediction time instance(s) corresponding to the F prediction instance(s).

In some implementations, the first temporal domain information includes at least one of: a measurement period, a first offset, K which is the number of the K measurement time instances; and/or the second temporal domain information includes at least one of: a prediction period, a second offset, and F which is the number of the F prediction time instance(s).

In some implementations, the first configuration information and/or the second configuration information are/is related to capability information of the terminal.

In some implementations, the apparatus may further include a transmitting unit 1803 configured to transmit capability information of the terminal to the network device, the capability information of the terminal including at least one of the following:
first information, for indicating whether the terminal supports temporal domain mobility measurement and/or prediction;
second information, for indicating at least one of: a maximum number of cells supported by the terminal to be measured on all CCs or BWPs; a maximum number of first downlink reference signal subsets supported by the terminal to be configured on all downlink CCs or BWPs; or a maximum number of first downlink reference signal subsets supported by the terminal to be measured on all downlink CCs or BWPs;
third information, for indicating at least one of: a maximum number of cells supported by the terminal to be predicted on all downlink CCs or BWPs; a maximum number of second downlink reference signal subsets supported by the terminal to be configured on all downlink CCs or BWPs; or a maximum number of first downlink reference signal subsets supported by the terminal to be predicted on all downlink CCs or BWPs;
fourth information, for indicating at least one of: a maximum number of cells supported by the terminal to be measured on on each downlink CC or BWP; a maximum number of first downlink reference signal subsets supported by the terminal to be configured on each downlink CC or BWP; or a maximum number of first downlink reference signal subsets supported by the terminal to be measured on each downlink CC or BWP;
fifth information, for indicating at least one of: a maximum number of cells supported by the terminal to be predicted on each downlink CC or BWP; a maximum number of second downlink reference signal subsets supported by the terminal to be configured on each downlink CC or BWP; or a maximum number of second downlink reference signal subsets supported by the terminal to be predicted on each downlink CC or BWP;
sixth information, for indicating a maximum number of downlink reference signals supported by the terminal to be measured within each first downlink reference signal subset;
seventh information, for indicating a maximum number of downlink reference signals supported by the terminal to be predicted within each second downlink reference signal subset;
Eighth information, for indicating a number of measurement time instances supported by the terminal;
Ninth information, for indicating a number of prediction time instances supported by the terminal.

In some implementations, the K measurement instance(s) may include:
K × N set(s) of link qualities; or,
KxN indexes and KxN set(s) of link qualities, the KxN indexes having a correspondence relationship with the KxN link qualities, and each of the K x N index(es) corresponding to a measurement time instance index and a cell index.

In some implementations, each of the F prediction instance(s) includes at least one of:
index(es) of top L cell(s) among the P cell(s);
index(es) of top J downlink reference signal resource(s) for each top cell; or
link quality corresponding to an index of each top downlink reference signal resource;
L, J being positive integers.

In some implementations, each prediction instance further includes a prediction instance index corresponding to the prediction instance.

In some implementations, the first model is on the terminal side.

In some implementations, the transmitting unit 1803 is configured to transmit the F prediction instance(s) to the network device.

In some implementations, manners of reporting the F prediction instance(s) include at least one of: periodic reporting, semi-persistent reporting, aperiodic reporting, or layer 1 and/or layer 2-based mobility event reporting.

In some implementations, for the periodic reporting or the semi-persistent reporting, the receiving unit 1802 is configured to receive third configuration information from the network device, the third configuration information being used to configure a reporting period and a reporting offset corresponding to the periodic reporting or the semi-persistent reporting.

In some implementations, for the aperiodic reporting, the receiving unit 1802 is configured to receive first DCI from the network device, the first DCI being used to trigger the aperiodic reporting.

In some implementations, the mobility event of layer 1 and/or layer 2 includes at least one of the following:
a first event that: at part or all of the F prediction time instance(s), a predicted link performance of a current serving cell is higher than a first threshold or lower than a second threshold;
a second event that: at part or all of the F prediction time instance(s), the predicted link performance of the current serving cell is higher or lower than a predicted link performance of a candidate cell plus an offset;
a third event that: at part or all of the F prediction time instance(s), the predicted link performance of the candidate cell is higher than a third threshold or lower than a fourth threshold; or
a fourth event that: the predicted link performance of the current serving cell is lower than a fifth threshold and the predicted link performance of the candidate cell is higher than a sixth threshold at part or all of the F prediction time instance(s);

The current cell is one of the P cell(s), and the candidate cell is one of the P cell(s) other than the current cell.

In some implementations, for the layer 1 and/or layer 2-based mobility event reporting, the transmitting unit 1803 is configured to determine that the mobility event of layer 1 and/or layer 2 is triggered, and transmit a reporting request to the network device. The receiving unit 1802 is configured to receive second DCI from the network device, the second DCI being used for scheduling a PUSCH for reporting.

In some implementations, the F prediction instance(s) may be reported at a granularity of one prediction instance.

In some implementations, the reporting has a first format which includes: a prediction time instance index, L cell index(es), X1 downlink reference signal resource indexes, and X1 link qualities.

The L cell index(es) are index(es) of top L cell(s) among the P cell(s); the X1 downlink reference signal resource indexes include index(es) of top J downlink reference signal resource(s) in each of the L cell(s); and the X1 link qualities have a correspondence relationship with the X1 downlink reference signal resource indexes.

In some implementations, the F prediction instance(s) may be reported at a granularity of F prediction instance(s).

In some implementations, the reporting has a second format, the second format including F group(s) of information having a correspondence relationship with the F prediction instance(s).

Each group of information in the F group(s) of information includes: a prediction time instance index, L cell index(es), X1 downlink reference signal resource indexes, and X1 link qualities; or,
Each group of information in the F group(s) of information includes: L cell index(es), X1 downlink reference signal resource indexes, and X1 link qualities.

The L cell index(es) are index(es) of top L cell(s) among the P cell(s); the X1 downlink reference signal resource indexes include index(es) of top J downlink reference signal resource(s) in each of the L cell(s); and the X1 link qualities have a correspondence relationship with the X1 downlink reference signal resource indexes.

In some implementations, the first model is on the network device side.

In some implementations, the transmitting unit 1803 is configured to transmit the K measurement instance(s) to the network device.

In some implementations, manners of reporting the F prediction instance(s) include at least one of: periodic reporting, semi-persistent reporting, and aperiodic reporting.

In some implementations, for the periodic reporting or the semi-persistent reporting, the receiving unit 1802 is configured to receive fourth configuration information from the network device, the fourth configuration information being used to configure a reporting period and a reporting offset corresponding to the periodic reporting or the semi-persistent reporting.

In some implementations, for the aperiodic reporting, the receiving unit 1802 is configured to receive third DCI from the network device, the third DCI being used to trigger the aperiodic reporting.

In some implementations, a granularity of reporting the K measurement instance(s) is one measurement instance.

In some implementations, the reporting has a third format, the third format including: a measurement time instance index and X2 link qualities.

The X2 link qualities include link quality(ies) of M downlink reference signal(s) of each of the N cell(s), M being a positive integer.

In some implementations, the reporting has a fourth format, the fourth format including: a measurement time instance index, N cell index(es), and X2 link qualities.

The X2 link qualities include link quality(ies) of M downlink reference signal(s) of each of the N cell(s), M being a positive integer.

In some implementations, a granularity of reporting the K measurement instance(s) is K measurement instance(s).

In some implementations, the reporting has a fifth format, the fifth format including K group(s) of information having a correspondence relationship with the K measurement instance(s), and each of the K group(s) of information including X2 link qualities.

The X2 link qualities include link quality(ies) of M downlink reference signal(s) of each of the N cell(s), M being a positive integer.

In some implementations, the reporting has a sixth format, the sixth format including: N cell index(es) and K group(s) of information, or the sixth format including: N cell index(es), K measurement instance index(es), and K group(s) of information. The K group(s) of information has(ve) a correspondence relationship with the K measurement instance index(es), and each of the K group(s) of information includes: X2 link qualities.

The X2 link qualities include link quality(ies) of M downlink reference signal(s) of each of the N cell(s), M being a positive integer.

In some implementations, a format of the X2 link qualities in the reporting is a differential reporting format or a non-differential reporting format.

In some implementations, for the case of the reporting granularity being one measurement instance, in the differential reporting format,
the X2 link qualities are represented by a reference link quality and X2-1 difference values; or,
the X2 link qualities are divided into N set(s) of link qualities, each set of link qualities being represented by a reference link quality and M-1 difference values.

In some implementations, for the case of the reporting granularity being K measurement instance(s), in the differential reporting format,
the K × X2 link qualities are represented by a reference link quality and K × X2 - 1 difference values; or,
the K × X2 link qualities are divided into K × N set(s) of link qualities, each set of link qualities being represented by a reference link quality and M - 1 difference values.

In some implementations, in the non-differential reporting format, the X2 link qualities are represented by X2 link qualities.

In some implementations, a granularity of reporting the K measurement instance(s) is a measurement result of one cell in one measurement instance.

In some implementations, the reporting has a sixth format, the sixth format including: a measurement time instance index, a cell index, and M link quality(ies).

The M link quality(ies) include(s) link quality(ies) of M downlink reference signal(s) of the cell corresponding to the cell index, and M is a positive integer.

In some implementations, a format of the M link quality(ies) in the reporting is a differential reporting format or a non-differential reporting format.

In some implementations, in the differential reporting format, the M link quality(ies) is (are) represented by a reference link quality and M-1 difference values.

In some implementations, in the non-differential reporting format, the M link quality(ies) is (are) represented by M link quality(ies).

In some implementations, the receiving unit 1802 is configured to receive a cell switch command from the network device, the cell switch command being used to instruct the terminal to switch to a target cell, and the target cell being determined based on part or all of the F prediction instance(s).

In some implementations, the transmitting unit 1803 is configured to transmit a cell switch request to the network device, the cell switch request carrying a target prediction instance, and the target prediction instance being determined based on the F prediction instance(s).

In some implementations, the measurement time instance(s) corresponding to the K measurement instance(s) and the prediction time instance(s) corresponding to the F prediction instance(s) satisfy the following temporal relationship:
measurement time instance(s) corresponding to the K measurement instance(s) is (are) within a first duration, and prediction time instance(s) corresponding to the F prediction instance(s) is (are) within a second duration, the second duration does not overlap with the first duration; or,
measurement instance(s) corresponding to the K measurement instance(s) is (are) within K first durations, and the prediction instance(s) corresponding to the F prediction instance(s) is (are) within a last first duration among the K first durations.

Those skilled in the art should understand that the related description of the above-described mobility prediction apparatus according to the embodiment of the present disclosure can be understood with reference to the related description of the temporal domain mobility prediction method according to the embodiments of the present disclosure.

FIG. 19 is a second schematic diagram of the structure and composition of the mobility prediction apparatus according to an embodiment of the present disclosure, and is applied to a network device. As shown in FIG. 19, the apparatus includes the following units.

A reception unit 1901 is configured to receive K measurement instance(s) corresponding to a first downlink reference signal set from a terminal, wherein the K measurement instance(s) is (are) obtained based on measurement performed by the terminal on downlink reference signals in the first downlink reference signal set at K measurement time instance(s), and the first downlink reference signal set includes first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set includes second downlink reference signal subsets of P cell(s), K, N, F, and P being integers greater than or equal to 1.

In some implementations, the apparatus may further include: a transmitting unit 1902 configured to transmit first configuration information and/or second configuration information to the terminal.

The first configuration information is used to configure the first downlink reference signal set, and the second configuration information is used to configure the second downlink reference signal set.

In some implementations, the first configuration information is further used to configure first temporal domain information corresponding to the first downlink reference signal set, and the first temporal domain information is used to determine K measurement time instance(s) corresponding to the K measurement instance(s); and/or,
the second configuration information is further used to configure second temporal domain information corresponding to the second downlink reference signal set, and the second temporal domain information is used to determine F prediction time instance(s) corresponding to the F prediction instance(s).

In some implementations, the first temporal domain information includes at least one of: a measurement period, a first offset, or K which is the number of the K measurement time instance(s); and/or,
the second temporal domain information includes at least one of: a prediction period, a second offset, or F which is the number of the F prediction time instance(s).

In some implementations, the first configuration information and/or the second configuration information are/is related to capability information of the terminal.

In some implementations, the receiving unit 1901 is configured to receive capability information of the terminal from the terminal, the capability information of the terminal including at least one of the following:
first information, for indicating whether the terminal supports temporal domain mobility measurement and/or prediction;
second information, for indicating at least one of: a maximum number of cells supported by the terminal to be measured on all downlink CCs or BWPs; a maximum number of first downlink reference signal subsets supported by the terminal to be configured on all downlink CCs or BWPs; or a maximum number of first downlink reference signal subsets supported by the terminal to be measured on all downlink CCs or BWPs;
third information, for indicating at least one of: a maximum number of cells supported by the terminal to be predicted on all downlink CCs or BWPs; a maximum number of second downlink reference signal subsets supported by the terminal to be configured on all downlink CCs or BWPs; or a maximum number of first downlink reference signal subsets supported by the terminal to be predicted on all downlink CCs or BWPs;
fourth information, for indicating at least one of: a maximum number of cells supported by the terminal to be measured on on each downlink CC or BWP; a maximum number of first downlink reference signal subsets supported by the terminal to be configured on each downlink CC or BWP; or a maximum number of first downlink reference signal subsets supported by the terminal to be measured on each downlink CC or BWP;
fifth information, for indicating at least one of: a maximum number of cells supported by the terminal to be predicted on each downlink CC or BWP; a maximum number of second downlink reference signal subsets supported by the terminal to be configured on each downlink CC or BWP; or a maximum number of second downlink reference signal subsets supported by the terminal to be predicted on each downlink CC or BWP;
sixth information, for indicating a maximum number of downlink reference signals supported by the terminal to be measured within each first downlink reference signal subset;
seventh information, for indicating a maximum number of downlink reference signals supported by the terminal to be predicted within each second downlink reference signal subset;
eighth information, for indicating a number of measurement time instances supported by the terminal; or
ninth information, for indicating a number of prediction time instances supported by the terminal.

In some implementations, the K measurement instance(s) may include:
K × N set(s) of link qualities; or,
N × K index(es) and N × K sets of link qualities, the N × K index(es) having a correspondence relationship with the N × K sets of link qualities, and each of the N × K index(es) corresponding to a cell index and a measurement time instance index.

In some implementations, each of the F prediction instance(s) may include at least one of the following:
index(es) of top L cell(s) among the P cell(s);
index(es) of top J downlink reference signal resource(s) for each top cell; or
link quality corresponding to an index of each top downlink reference signal resource;
L, J being positive integers.

In some implementations, each prediction instance further includes a prediction instance index corresponding to the prediction instance.

In some implementations, manners of reporting the F prediction instance(s) include at least one of: periodic reporting, semi-persistent reporting, and aperiodic reporting.

In some implementations, the transmitting unit 1902 is configured to transmit fourth configuration information to the terminal, the fourth configuration information being used to configure a reporting period and a reporting offset corresponding to the periodic reporting or the semi-persistent reporting.

In some implementations, the transmitting unit 1902 is configured to transmit third DCI to the terminal, the third DCI being used to trigger the aperiodic reporting.

In some implementations, a granularity of reporting the K measurement instance(s) is one measurement instance.

In some implementations, the reporting has a third format, the third format including: a measurement time instance index and X2 link qualities.

The X2 link qualities include link quality(ies) of M downlink reference signal(s) of each of the N cell(s), M being a positive integer.

In some implementations, the reporting has a fourth format, the fourth format including: measurement time instance indexes, N cell index(es), and X2 link qualities.

The X2 link qualities include link quality(ies) of M downlink reference signal(s) of each of the N cell(s), M being a positive integer.

In some implementations, a granularity of reporting the K measurement instance(s) is K measurement instance(s).

In some implementations, the reporting has a fifth format, the fifth format including: K group(s) of information having a correspondence relationship with the K measurement instance(s). Each of the K group(s) of information includes: X2 link qualities.

The X2 link qualities include link quality(ies) of M downlink reference signal(s) of each of the N cell(s), M being a positive integer.

In some implementations, the reporting has a sixth format, the sixth format including: N cell index(es) and K group(s) of information, or the sixth format including: N cell index(es), K measurement instance index(es), and K group(s) of information. The K group(s) of information has(ve) a correspondence relationship with the K measurement instance index(es). Each of the K group(s) of information includes: X2 link qualities.

The X2 link qualities include link quality(ies) of M downlink reference signal(s) of each of the N cell(s), M being a positive integer.

In some implementations, the format of the X2 link qualities in the reporting is a differential reporting format or a non-differential reporting format.

In some implementations, for cases where the granularity of reporting is one measurement instance,
the X2 link qualities are represented by a reference link quality and X2-1 difference values; or,
the X2 link qualities are divided into N set(s) of link qualities, each set of link qualities being represented by a reference link quality and M-1 difference values.

In some implementations, for the case where the granularity of reporting is K measurement instance(s), in the differential reporting format,
the K × X2 link qualities are represented by a reference link quality and K × X2 - 1 difference values; or,
the K × X2 link qualities are divided into K × N set(s) of link qualities, each set of link qualities being represented by a reference link quality and M - 1 difference values.

In some implementations, in the non-differential reporting format, the X2 link qualities are represented by X2 link qualities.

In some implementations, a granularity of reporting the K measurement instance(s) is a measurement result of one cell in one measurement instance.

In some implementations, the reporting has a sixth format, the sixth format including: a measurement time instance index, a cell index, and M link quality(ies).

The M link quality(ies) include(s) link quality(ies) of M downlink reference signal(s) of the cell corresponding to the cell index, and M is a positive integer.

In some implementations, a format of the M link quality(ies) in the reporting is a differential reporting format or a non-differential reporting format.

In some implementations, in the differential reporting format, the M link quality(ies) is (are) represented by a reference link quality and M-1 difference values.

In some implementations, in the non-differential reporting format, the M link quality(ies) is (are) represented by M link quality(ies).

In some implementations, the transmitting unit 1902 is configured to transmit a cell switch command to the terminal, the cell switch command being used to instruct the terminal to switch to a target cell which is determined based on part or all of the F prediction instance(s).

In some implementations, the measurement time instance(s) corresponding to the K measurement instance(s) and the prediction time instance(s) corresponding to the F prediction instance(s) satisfy the following temporal relationship:
measurement time instance(s) corresponding to the K measurement instance(s) is (are) within a first duration, and prediction time instance(s) corresponding to the F prediction instance(s) is (are) within a second duration, the second duration does not overlap with the first duration; or,
measurement instance(s) corresponding to the K measurement instance(s) is (are) within K first durations, and the prediction instances corresponding to the F prediction instance(s) is (are) within a last first duration of the K first durations.

Those skilled in the art should understand that the related description of the above-described mobility prediction apparatus according to the embodiment of the present disclosure can be understood with reference to the related description of the temporal domain mobility prediction method according to the embodiment of the present disclosure.

FIG. 20 is a schematic configuration diagram of a communication device 2000 according to an embodiment of the present disclosure. The communication device may be a terminal or a network device. The communication device 2000 shown in FIG. 20 includes a processor 2010, and the processor 2010 can call and run a computer program from a memory to implement the method in the embodiment of the present disclosure.

Optionally, as shown in FIG. 20, the communication device 2000 may further include a memory 2020. The processor 2010 may call and run a computer program from the memory 2020 to implement the methods in the embodiments of the present disclosure.

Here, the memory 2020 may be a separate device independent of the processor 2010 or may be integrated in the processor 2010.

Optionally, as shown in FIG. 20, the communication device 2000 may further include a transceiver 2030 that the processor 2010 may control to communicate with other devices, specifically, may transmit information or data to or receive information or data from other devices.

Here, the transceiver 2030 may include a transmitter and a receiver. The transceiver 2030 may further include antennas, and the number of antennas may be one or more.

Optionally, the communication device 2000 may be a network device according to the embodiments of the present disclosure, and the communication device 2000 may implement corresponding processes implemented by the network device in each method according to the embodiments of the present disclosure, and will not be repeatedly described herein for the sake of simplicity.

Optionally, the communication device 2000 may be a mobile terminal/terminal according to the embodiments of the present disclosure, and the communication device 2000 may implement corresponding procedures implemented by the mobile terminal/terminal in each method according to the embodiments of the present disclosure, and will not be repeatedly described herein for the sake of simplicity.

FIG. 21 is a schematic structural diagram of a chip according to an embodiment of the present disclosure. The chip 2100 shown in FIG. 21 includes a processor 2110, and the processor 2110 can call and run a computer program from a memory to implement the methods in the embodiments of the present disclosure.

Optionally, as shown in FIG. 21, the chip 2100 may further include a memory 2120. Here, the processor 2110 may call and run a computer program from the memory 2120 to implement the methods in the embodiments of the present disclosure.

Here, the memory 2120 may be a separate device separate from the processor 2110 or may be integrated in the processor 2110.

Optionally, the chip 2100 may further include an input interface 2130. The processor 2110 may control the input interface 2130 to communicate with other devices or chips, specifically, may acquire information or data from other devices or chips.

Optionally, the chip 2100 may further include an output interface 2140. The processor 2110 may control the output interface 2140 to communicate with other devices or chips, specifically, may output information or data to other devices or chips.

Optionally, the chip can be applied to the network device in the embodiments of the present disclosure, and the chip can implement the corresponding processes implemented by the network device in each method of the embodiments of the present disclosure, and will not be repeatedly described here for the sake of simplicity.

Optionally, the chip can be applied to the mobile terminal/terminal in the embodiments of the present disclosure, and the chip can implement the corresponding processes implemented by the mobile terminal/terminal in each method of the embodiments of the present disclosure, and will not be repeatedly described here for the sake of simplicity.

It should be understood that the chip mentioned in the embodiments of the present disclosure may also be referred to as a system-level chip, or a system chip, or a chip system, or a system-on-chip chip.

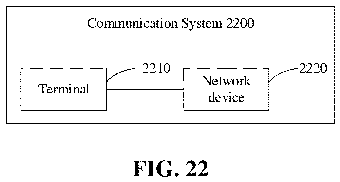

FIG. 22 is a schematic block diagram of a communication system 2200 according to an embodiment of the present disclosure. As shown in FIG. 22, the communication system 2200 includes a terminal 2210 and a network device 2220.

Here, the terminal 2210 may be used to implement the corresponding functions implemented by the terminal in the above-described methods, and the network device 2220 may be used to implement the corresponding functions implemented by the network device in the above-described methods, which will not be described herein for the sake of brevity.

It should be understood that the processor of the embodiments of the present disclosure may be an integrated circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component. The methods, steps, and logical block diagrams disclosed in the embodiments of the present disclosure may be implemented or executed. The general purpose processor may be a microprocessor or the processor may be any conventional processor or the like. The steps of the method disclosed in connection with the embodiments of the present disclosure may be directly embodied as being implemented by the hardware decoding processor, or may be executed by combining hardware and software modules in a decoding processor. The software module may be located in a storage medium mature in the art, such as random access memory, flash memory, read-only memory, programmable read-only memory, or electrically erasable and writable programmable memory, registers, etc. The storage medium is located in the memory, and the processor may read the information in the memory, and combine hardware to complete the steps of the above methods.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not exhausive, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

Embodiments of the present disclosure also provide a computer-readable storage medium for storing a computer program.

Optionally, the computer-readable storage medium can be applied to the network device in the embodiments of the present disclosure, and the computer program causes the computer to execute the corresponding flow implemented by the network device in each method of the embodiments of the present disclosure, and will not be repeated here for the sake of brevity.

Optionally, the computer-readable storage medium can be applied to the mobile terminal/terminal in the embodiments of the present disclosure, and the computer program causes the computer to execute the corresponding flow implemented by the mobile terminal/terminal in each method of the embodiments of the present disclosure, and will not be repeated here for the sake of brevity.

Embodiments of the present disclosure also provide a computer program product including computer program instructions.

Optionally, the computer program product can be applied to the network device in the embodiments of the present disclosure, and the computer program instructions cause a computer to execute the corresponding flow implemented by the network device in each method in the embodiments of the present disclosure, and will not be described herein for the sake of brevity.

Optionally, the computer program product can be applied to the mobile terminal/terminal in the embodiments of the present disclosure, and the computer program instructions cause a computer to execute the corresponding flow implemented by the mobile terminal/terminal in each method of the embodiments of the present disclosure, and will not be repeated here for the sake of brevity.

Embodiments of the present disclosure also provide a computer program.

Optionally, the computer program can be applied to the network device in the embodiments of the present disclosure, and when the computer program is run on a computer, the computer executes the corresponding process implemented by the network device in each method of the embodiments of the present disclosure, which will not be described herein for the sake of simplicity.

Optionally, the computer program can be applied to the mobile terminal/terminal in the embodiments of the present disclosure, and when the computer program is run on a computer, the computer executes the corresponding process implemented by the mobile terminal/terminal in each method of the embodiments of the present disclosure, which is not repeated here for the sake of conciseness.

Those of ordinary skill in the art will appreciate that the elements and algorithmic steps of the examples described in connection with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, devices and units described above can refer to the corresponding processes in the aforementioned method embodiments, and will not be repeatedly described here.

In several embodiments provided herein, it should be understood that the disclosed systems, apparatuses and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may be or may not be physically separated, and the units displayed as units may be or may not be physical units, that is, they may be located in one place or may be distributed over a plurality of network units. Part or all of the units may be selected according to actual needs to achieve the purpose of the solution of the present embodiment.

In addition, each functional unit in each embodiment of the present disclosure may be integrated in one processing unit, each unit may be physically presented alone, or two or more units may be integrated in one unit.

The functions may be stored in a computer-readable storage medium if implemented in the form of software functional units and sold or used as a stand-alone product. Based on this understanding, the technical solutions of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the steps of the method described in various embodiments. The storage medium includes a USB disk, a removable hard disk, a Read-Only Memory (ROM), a Random Access Memory (RAM), a magnetic disk, or an optical disk that can store a program code.

## Claims

1. A mobility prediction method, comprising:
obtaining, by a terminal, K measurement instance(s) corresponding to a first downlink reference signal set, wherein the K measurement instance(s) is (are) obtained based on measurement performed by the terminal on downlink reference signals in the first downlink reference signal set at K measurement time instance(s), and the first downlink reference signal set comprises first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set comprises second downlink reference signal subsets of P cell(s), K, N, F, and P being integers greater than or equal to 1.

2. The method of claim 1, further comprising:
receiving, by the terminal, first configuration information and/or second configuration information from a network device,
wherein the first configuration information is used to configure the first downlink reference signal set, and the second configuration information is used to configure the second downlink reference signal set.

3. The method of claim 2, wherein
the first configuration information is further used to configure first temporal domain information corresponding to the first downlink reference signal set, the first temporal domain information being used to determine K measurement time instance(s) corresponding to the K measurement instance(s); and/or,
the second configuration information is further used to configure second temporal domain information corresponding to the second downlink reference signal set, the second temporal domain information being used to determine F prediction time instance(s) corresponding to the F prediction instance(s).

4. The method of claim 3, wherein
the first temporal domain information comprises at least one of: a measurement period, a first offset, and K which is the number of the K measurement time instance(s); and/or,
the second temporal domain information comprises at least one of: a prediction period, a second offset, and F which is the number of the F prediction time instance(s).

5. The method of any one of claims 2 to 4, wherein the first configuration information and/or the second configuration information are/is related to capability information of the terminal.

6. The method of any one of claims 2 to 5, further comprising:
transmitting, by the terminal, the capability information of the terminal to the network device, wherein the capability information of the terminal comprises at least one of followings:
first information, for indicating whether the terminal supports temporal domain mobility measurement and/or prediction;
second information, for indicating at least one of: a maximum number of cells supported by the terminal to be measured on all downlink carrier components (CCs) or bandwidth parts (BWPs); a maximum number of first downlink reference signal subsets supported by the terminal to be configured on all downlink CCs or BWPs; or a maximum number of first downlink reference signal subsets supported by the terminal to be measured on all downlink CCs or BWPs;
third information, for indicating at least one of: a maximum number of cells supported by the terminal to be predicted on all downlink CCs or BWPs; a maximum number of second downlink reference signal subsets supported by the terminal to be configured on all downlink CCs or BWPs; or a maximum number of first downlink reference signal subsets supported by the terminal to be predicted on all downlink CCs or BWPs;
fourth information, for indicating at least one of: a maximum number of cells supported by the terminal to be measured on each downlink CC or BWP; a maximum number of first downlink reference signal subsets supported by the terminal to be configured on each downlink CC or BWP; or a maximum number of first downlink reference signal subsets supported by the terminal to be measured on each downlink CC or BWP;
fifth information, for indicating at least one of: a maximum number of cells supported by the terminal to be predicted on each downlink CC or BWP; a maximum number of second downlink reference signal subsets supported by the terminal to be configured on each downlink CC or BWP; or a maximum number of second downlink reference signal subsets supported by the terminal to be predicted on each downlink CC or BWP;
sixth information, for indicating a maximum number of downlink reference signals supported by the terminal to be measured within each first downlink reference signal subset;
seventh information, for indicating a maximum number of downlink reference signals supported by the terminal to be predicted within each of the second downlink reference signal subsets;
eighth information, for indicating a number of measurement time instances supported by the terminal; or
ninth information, for indicating a number of prediction time instances supported by the terminal.

7. The method of any one of claims 1 to 6, wherein the K measurement instance(s) comprise:
K × N set(s) of link qualities; or,
K x N index(es) and K × N set(s) of link qualities, wherein there is a correspondence relationship between the K x N index(es) and the K × N link qualities, and each of the K x N index(es) corresponds to a measurement time instance index and a cell index.

8. The method of any one of claims 1 to 7, wherein each of the F prediction instance(s) comprises at least one of:
index(es) of top L cell(s) among the P cell(s);
index(es) of top J downlink reference signal resource(s) for each top cell; or
link quality corresponding to an index of each top downlink reference signal resource;
L, J being positive integers.

9. The method of claim 8, wherein each prediction instance further comprises a prediction time instance index corresponding to the prediction instance.

10. The method of any one of claims 1 to 8, wherein the first model is on the terminal side.

11. The method of claim 10, further comprising:
transmitting, by the terminal, the F prediction instance(s) to a network device.

12. The method of claim 11, wherein manners of reporting the F prediction instance(s) comprise at least one of followings: periodic reporting, semi-persistent reporting, aperiodic reporting, and layer 1 and/or layer 2-based mobility event reporting.

13. The method of claim 12, wherein for the periodic reporting or the semi-persistent reporting, before the terminal transmits the F prediction instance(s) to the network device, the method further comprises:
receiving, by the terminal, third configuration information from the network device, the third configuration information being used to configure a reporting period and a reporting offset corresponding to the periodic reporting or the semi-persistent reporting.

14. The method of claim 12, wherein for the aperiodic reporting, before the terminal transmits the F prediction instance(s) to the network device, the method further comprises:
receiving, by the terminal, first downlink control information (DCI) from the network device, the first DCI being used to trigger the aperiodic reporting.

15. The method of claim 12, wherein the mobility event of the layer 1 and/or layer 2 comprises at least one of:
a first event that: at part or all of the F prediction time instance(s) at part or all of the F prediction time instance(s), a predicted link performance of a current serving cell is higher than a first threshold or lower than a second threshold;
a second event that: at part or all of the F prediction time instance(s), the predicted link performance of the current serving cell is higher or lower than a predicted link performance of a candidate cell plus an offset;
a third event that: at part or all of the F prediction time instance(s), the predicted link performance of the candidate cell is higher than a third threshold or lower than a fourth threshold; or
a fourth event that: at part or all of the F prediction time instance(s), the predicted link performance of the current serving cell is lower than a fifth threshold and the predicted link performance of the candidate cell is higher than a sixth threshold at part or all of the F prediction time instance(s),
wherein the current cell is one of the P cell(s), and the candidate cell is one of the P cell(s) other than the current cell.

16. The method of claim 12 or 15, wherein for the layer 1 and/or layer 2-based mobility event reporting, before the terminal transmits the F prediction instance(s) to the network device, the method further comprises:
determining, by the terminal, that the mobility event of the layer 1 and/or the layer 2 and/is triggered, and sending a reporting request to the network device; and
receiving, by the terminal, second DCI from the network device, the second DCI being used for scheduling a physical uplink shared channel (PUSCH) for reporting.

17. The method of any one of claims 11 to 16, wherein the F prediction instance(s) is (are) reported at a granularity of one prediction instance.

18. The method of claim 17, wherein the reporting has a first format, the first format comprising: a prediction time instance index, L cell index(es), X1 downlink reference signal resource indexes, and X1 link qualities,
wherein the L cell index(es) are index(es) of top L cell(s) among the P cell(s); the X1 downlink reference signal resource indexes comprise index(es) of top J downlink reference signal resource(s) in each of the L cell(s); and the X1 link qualities have a correspondence relationship with the X1 downlink reference signal resource indexes.

19. The method of any one of claims 11 to 16, wherein the F prediction instance(s) is (are) reported at a granularity of F prediction instance(s).

20. The method of claim 19, wherein the reporting has a second format, the second format comprising F group(s) of information, the F group(s) of information having a correspondence relationship with the F prediction instance(s),
wherein each group of information in the F group(s) of information comprises: a prediction time instance index, L cell index(es), X1 downlink reference signal resource indexes, and X1 link qualities; or,
each group of information in the F group(s) of information comprises: L cell index(es), X1 downlink reference signal resource indexes, and X1 link qualities,
wherein the L cell index(es) are index(es) of top L cell(s) among the P cell(s); the X1 downlink reference signal resource indexes comprise index(es) of top J downlink reference signal resource(s) in each of the L cell(s); and the X1 link qualities have a correspondence relationship with the X1 downlink reference signal resource indexes.

21. The method of any one of claims 1 to 8, wherein the first model is on a network device side.

22. The method of claim 21, further comprising:
transmitting, by the terminal, the K measurement instance(s) to the network device.

23. The method of claim 22, wherein manners of reporting the K measurement instance(s) comprise at least one of: periodic reporting, semi-persistent reporting, and aperiodic reporting.

24. The method of claim 23, wherein for the periodic reporting or the semi-persistent reporting, before the terminal transmits the K measurement instance(s) to the network device, the method further comprises:
receiving, by the terminal, fourth configuration information from the network device, the fourth configuration information being used to configure a reporting period and a reporting offset corresponding to the periodic reporting or the semi-persistent reporting.

25. The method of claim 23, wherein for the aperiodic reporting, before the terminal transmits the K measurement instance(s) to the network device, the method further comprises:
receiving, by the terminal, third DCI from the network device, the third DCI being used to trigger the aperiodic reporting.

26. The method of any one of claims 22 to 25, wherein a granularity of reporting the K measurement instance(s) is one measurement instance.

27. The method of claim 26, wherein the reporting has a third format, the third format comprising: a measurement time instance index and X2 link qualities,
wherein the X2 link qualities comprise link quality(ies) of M downlink reference signal(s) in each of the N cell(s), and M is a positive integer.

28. The method of claim 26, wherein the reporting has a fourth format, the fourth format comprising: a measurement time instance index, N cell index(es), and X2 link qualities,
wherein the X2 link qualities comprise link quality(ies) of M downlink reference signal(s) in each of the N cell(s), and M is a positive integer.

29. The method of any one of claims 22 to 25, wherein a granularity of reporting the K measurement instance(s) is K measurement instance(s).

30. The method of claim 29, wherein the reporting has a fifth format, wherein the fifth format comprises K group(s) of information having a correspondence relationship with the K measurement instance(s), and each of the K group(s) of information comprises X2 link qualities,
wherein the X2 link qualities comprise link quality(ies) of M downlink reference signal(s) in each of the N cell(s), and M is a positive integer.

31. The method of claim 29, wherein the reporting has a sixth format, the sixth format comprising: N cell index(es) and K group(s) of information, or the sixth format comprising: N cell index(es), K measurement instance index(es), and K group(s) of information, wherein the K group(s) of information has(ve) a correspondence relationship with the K measurement instance index(es), and each of the K group(s) of information comprises: X2 link qualities,
wherein the X2 link qualities comprise link quality(ies) of M downlink reference signal(s) of each of the N cell(s), and M is a positive integer.

32. The method of any one of claims 27 to 31, wherein a format of the X2 link qualities in the reporting is a differential reporting format or a non-differential reporting format.

33. The method of claim 32, wherein in the differential reporting format, for the case of the granularity of reporting being one measurement instance,
the X2 link qualities are represented by a reference link quality and X2-1 difference values; or,
the X2 link qualities are divided into N set(s) of link qualities, and each set of link qualities is represented by a reference link quality and M-1 difference values.

34. The method of claim 32, wherein in the differential reporting format, for the case of the granularity of reporting being K measurement instance(s),
K × X2 link qualities are represented by a reference link quality and K × X2-1 difference values; or,
K × X2 link qualities are divided into K × N set(s) of link qualities, and each set of link qualities is represented by a reference link quality and M-1 difference values.

35. The method of claim 32, wherein in the non-differential reporting format, the X2 link qualities are represented by X2 link qualities.

36. The method of any one of claims 22 to 25, wherein a granularity of reporting the K measurement instance(s) is a measurement result of one cell in one measurement instance.

37. The method of claim 36, wherein the reporting has a sixth format, the sixth format comprising: a measurement time instance index, a cell index, and M link quality(ies),
wherein the M link quality(ies) comprise link quality(ies) of M downlink reference signal(s) of a cell corresponding to the cell index, and M is a positive integer.

38. The method of claim 37, wherein the M link quality(ies) is (are) reported in a differential reporting format or a non-differential reporting format.

39. The method of claim 38, wherein in the differential reporting format, the M link quality(ies) is (are) represented by a reference link quality and M - 1 difference values.

40. The method of claim 38, wherein in the non-differential reporting format, the M link quality(ies) is (are) represented by M link quality(ies).

41. The method of any one of claims 1 to 40, further comprising:
receiving, by the terminal, a cell switch command from a network device, wherein the cell switch command is used to instruct the terminal to switch to a target cell, and the target cell is determined based on part or all of the F prediction instance(s).

42. The method of any one of claims 1 to 20, further comprising:
transmitting, by the terminal, a cell switch request to a network device, wherein the cell switch request carries a target prediction instance, and the target prediction instance is determined based on the F prediction instance(s).

43. The method of any one of claims 1 to 42, wherein measurement time instance(s) corresponding to the K measurement instance(s) and prediction time instance(s) corresponding to the F prediction instance(s) satisfy a following temporal relationship:
the measurement time instance(s) corresponding to the K measurement instance(s) is (are) within a first duration, and the prediction time instance(s) corresponding to the F prediction instance(s) is (are) within a second duration, and the second duration does not overlap with the first duration; or,
the measurement time instance(s) corresponding to the K measurement instance(s) is (are) within K first durations, and the prediction time instance(s) corresponding to the F prediction instance(s) is (are) within a last first duration of the K first durations.

44. A mobility prediction method, comprising:
receiving, by a network device, K measurement instance(s) corresponding to a first downlink reference signal set from a terminal, wherein the K measurement instance(s) is (are) obtained based on measurement performed by the terminal on downlink reference signals in the first downlink reference signal set at K measurement time instance(s), and the first downlink reference signal set comprises first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set comprises second downlink reference signal subsets of P cell(s), K, N, F, and P being integers greater than or equal to 1.

45. The method of claim 44, further comprising:
transmitting, by the network device, first configuration information and/or second configuration information to the terminal,
wherein the first configuration information is used to configure the first downlink reference signal set, and the second configuration information is used to configure the second downlink reference signal set.

46. The method of claim 45, wherein
the first configuration information is further used to configure first temporal domain information corresponding to the first downlink reference signal set, the first temporal domain information being used to determine K measurement time instances corresponding to the K measurement instance(s); and/or,
the second configuration information is further used to configure second temporal domain information corresponding to the second downlink reference signal set, the second temporal domain information being used to determine F prediction time instance(s) corresponding to the F prediction instance(s).

47. The method of claim 46, wherein
the first temporal domain information comprises at least one of: a measurement period, a first offset, K which is the number of the K measurement time instance(s); and/or,
the second temporal domain information comprises at least one of: a prediction period, a second offset, and F which is the number of the F prediction time instance(s).

48. The method of any one of claims 45 to 47, wherein the first configuration information and/or the second configuration information are/is related to capability information of the terminal.

49. The method of any one of claims 45 to 48, further comprising:
receiving, by the network devivce, capability information of the terminal from the terminal, wherein the capability information of the terminal comprises at least one of followings:
first information, for indicating whether the terminal supports temporal domain mobility measurement and/or prediction;
second information, for indicating at least one of: a maximum number of cells supported by the terminal to be measured on on all downlink carrier components (CCs) or bandwidth parts (BWPs); a maximum number of first downlink reference signal subsets supported by the terminal to be configured on all downlink CCs or BWPs; or a maximum number of first downlink reference signal subsets supported by the terminal to be measured on all downlink CCs or BWPs;
third information, for indicating at least one of: a maximum number of cells supported by the terminal to be predicted on all downlink CCs or BWPs; a maximum number of second downlink reference signal subsets supported by the terminal to be configured on all downlink CCs or BWPs; or a maximum number of first downlink reference signal subsets supported by the terminal to be predicted on all downlink CCs or BWPs;
fourth information, for indicating at least one of: a maximum number of cells supported by the terminal to be measured on on each downlink CC or BWP; a maximum number of first downlink reference signal subsets supported by the terminal to be configured on each downlink CC or BWP; or a maximum number of first downlink reference signal subsets supported by the terminal to be measured on each downlink CC or BWP;
fifth information, for indicating at least one of: a maximum number of cells supported by the terminal to be predicted on each downlink CC or BWP; a maximum number of second downlink reference signal subsets supported by the terminal to be configured on each downlink CC or BWP; or a maximum number of second downlink reference signal subsets supported by the terminal to be predicted on each downlink CC or BWP;
sixth information, for indicating a maximum number of downlink reference signals supported by the terminal to be measured within each first downlink reference signal subset;
seventh information, for indicating a maximum number of downlink reference signals supported by the terminal to be predicted within each second downlink reference signal subset;
eighth information, for indicating a number of measurement time instances supported by the terminal; or
ninth information, for indicating a number of prediction time instances supported by the terminal.

50. The method of any one of claims 44 to 49, wherein the K measurement instance(s) comprise:
N × K sets of link qualities; or,
N × K index(es) and K × N set(s) of link qualities, wherein the N × K index(es) has(ve) a correspondence relationship with the N × K link quality(ies), and each of the N × K index(es) correspond(s) to a cell index and a measurement time instance index.

51. The method of any one of claims 44-50, wherein each of the F prediction instance(s) comprises at least one of:
index(es) of top L cell(s) among the P cell(s);
index(es) of top J downlink reference signal resource(s) for each top cell; or
link quality corresponding to an index of each top downlink reference signal resource;
L, J being positive integers.

52. The method of claim 51, wherein each prediction instance further comprises a prediction time instance index corresponding to the prediction instance.

53. The method of any one of claims 44 to 52, wherein manners of reporting the F prediction instance(s) comprise at least one of followings: periodic reporting, semi-persistent reporting, and aperiodic reporting.

54. The method of claim 53, further comprising:
transmitting, by the network device, fourth configuration information to the terminal, the fourth configuration information being used for configuring a reporting period and a reporting offset corresponding to the periodic reporting or the semi-persistent reporting.

55. The method of claim 53, further comprising:
transmitting, by the network device, third DCI to the terminal, the third DCI being used to trigger the aperiodic reporting.

56. The method of any one of claims 44 to 55, wherein a granularity of reporting the K measurement instance(s) is one measurement instance.

57. The method of claim 56, wherein the reporting has a third format, the third format comprising: a measurement time instance index and X2 link qualities,
wherein the X2 link qualities comprise link qualities of M downlink reference signal(s) of each of the N cell(s), and M is a positive integer.

58. The method of claim 56, wherein the reporting has a fourth format, the fourth format comprising: a measurement time instance index, N cell index(es), and X2 link qualities,
wherein the X2 link qualities comprise link quality(ies) of M downlink reference signal(s) of each of the N cell(s), and M is a positive integer.

59. The method of any one of claims 44 to 55, wherein a granularity of reporting the K measurement instance(s) is K measurement instance(s).

60. The method of claim 59, wherein the reporting has a fifth format, wherein the fifth format comprises: K group(s) of information which have a correspondence relationship with the K measurement instance(s), and each of the K group(s) of information comprises X2 link qualities,
wherein the X2 link qualities comprise link quality(ies) of M downlink reference signal(s) of each of the N cell(s), and M is a positive integer.

61. The method of claim 59, wherein the reporting has a sixth format, the sixth format comprising N cell index(es) and K group(s) of information, or the sixth format comprising N cell index(es), K measurement instance index(es) and K group(s) of information, wherein the K group(s) of information has(ve) a correspondence relationship with the K measurement instance index(es), and each of the K group(s) of information comprise(s) X2 link qualities,
wherein the X2 link qualities comprise link quality(ies) of M downlink reference signal(s) of each of the N cell(s), and M is a positive integer.

62. The method of any one of claims 57 to 61, wherein a format of the X2 link qualities in the reporting is a differential reporting format or a non-differential reporting format.

63. The method of claim 62, wherein in the differential reporting format, for the case of the granularity of reporting being one measurement instance,
the X2 link qualities are represented by a reference link quality and X2-1 difference values; or,
the X2 link qualities are divided into N set(s) of link qualities, and each set of link qualities is represented by a reference link quality and M-1 difference values.

64. The method of claim 62, wherein in the differential reporting format, for the case of the granularity of reporting being K measurement instance(s),
K × X2 link qualities are represented by a reference link quality and K × X2-1 difference values; or,
K × X2 link qualities are divided into K × N set(s) of link qualities, and each set of link qualities is represented by a reference link quality and M-1 difference values.

65. The method of claim 62, wherein in the non-differential reporting format, the X2 link qualities are represented by X2 link qualities.

66. The method of any one of claims 44 to 55, wherein a granularity of reporting the K measurement instance(s) is a measurement result of one cell in one measurement instance.

67. The method of claim 66, wherein the reporting has a sixth format, the sixth format comprising: a measurement time instance index, a cell index, and M link quality(ies),
wherein the M link quality(ies) comprise link quality(ies) of M downlink reference signal(s) of a cell corresponding to the cell index, and M is a positive integer.

68. The method of claim 67, wherein the M link quality(ies) is (are) reported in a differential reporting format or a non-differential reporting format.

69. The method of claim 68, wherein in the differential reporting format, the M link quality(ies) is (are) represented by a reference link quality and M-1 difference values.

70. The method of claim 68, wherein in the non-differential reporting format, the M link quality(ies) is (are) represented by M link quality(ies).

71. The method of any one of claims 44-70, further comprising:
transmitting, by the network device, a cell switch command to the terminal, wherein the cell switch command is used to instruct the terminal to switch to a target cell, and the target cell is determined based on part or all of the F prediction instance(s).

72. The method of any one of claims 44 to 71, wherein measurement time instance(s) corresponding to the K measurement instance(s) and prediction time instance(s) corresponding to the F prediction instance(s) satisfy a following temporal relationship:
the measurement time instance(s) corresponding to the K measurement instance(s) is (are) within a first duration, and the prediction time instance(s) corresponding to the F prediction instance(s) is (are) within a second duration, and the second duration does not overlap with the first duration; or,
the measurement time instance(s) corresponding to the K measurement instance(s) is (are) within K first durations, and the prediction time instance(s) corresponding to the F prediction instance(s) is (are) within a last first duration among the K first durations.

73. A mobility prediction apparatus, applied to a terminal, the apparatus comprising:
an obtaining unit, configured to obtain K measurement instance(s) corresponding to a first downlink reference signal set, wherein the K measurement instance(s) is (are) obtained based on measurement performed by the terminal on downlink reference signals in the first downlink reference signal set at K measurement time instance(s), and the first downlink reference signal set comprises first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set comprises second downlink reference signal subsets of P cell(s), K, N, F, and P being integers greater than or equal to 1.

74. A mobility prediction apparatus, applied to a network device, the apparatus comprising:
a receiving unit, configured to receive K measurement instance(s) corresponding to a first downlink reference signal set from a terminal, wherein the K measurement instance(s) is (are) obtained based on measurement performed by the terminal on downlink reference signals in the first downlink reference signal set at K measurement time instance(s), and the first downlink reference signal set comprises first downlink reference signal subsets of N cell(s), wherein the K measurement instance(s) is (are) used to obtain F prediction instance(s) corresponding to a second downlink reference signal set based on a first model, different prediction instances correspond to different prediction time instances, and the second downlink reference signal set comprises second downlink reference signal subsets of P cell(s), K, N, F, and P being integers greater than or equal to 1.

75. A communication device, comprising: a processor, and a memory for storing a computer program, wherein the processor is configured to invoke and execute the computer program stored in the memory to cause the communication device to perform a method of any one of claims 1 to 43 or a method of any one of claims 44 to 72.

76. A chip, comprising: a processor for invoking and executing a computer program from a memory to cause a device on which the chip is mounted to perform the method of any one of claims 1 to 43, or the method of any one of claims 44 to 72.

77. A computer-readable storage medium, for storing a computer program that causes a computer to perform the method of any one of claims 1 to 43, or the method of any one of claims 44 to 72.

78. A computer program product, comprising computer program instructions that cause a computer to perform a method of any one of claims 1 to 43 or a method of any one of claims 44 to 72.

79. A computer program, causing a computer to perform the method of any one of claims 1 to 43, or the method of any one of claims 44 to 72.
